# EUROPEAN PATENT SPECIFICATION

(11) **EP 2 969 725 B1**
(45) Date of publication and mention of the grant of the patent: **02.12.2020**
(21) Application number: 14719961.6
(22) Date of filing: 13.03.2014
(51) Int. Cl.: B62K 19/38, B62K 25/02, F16B 37/08

(54) **BICYCLE TENSIONING DEVICE**
FAHRRADSPANNVORRICHTUNG
DISPOSITIF DE TENSION POUR BICYCLETTE

(30) Priority: 15.03.2013 US 201313839168; 22.08.2013 US 201361869015 P
(43) Date of publication of application: 20.01.2016
(73) Proprietor: Voss, Darrell W., Vancouver, WA 98666 (US)
(72) Inventor: Voss, Darrell W., Vancouver, WA 98666 (US)
(74) Representative: Dickerson, David
(86) International application number: PCT/US2014/026443
(87) International publication number: WO 2014/151783

(56) References cited:
- WO-A2-2006/138699
- US-A1- 2013 033 096
- US-B1- 8 382 415

## Description

### FIELD OF THE INVENTION

The field of the invention relates generally to tension clamping members for a bicycle. The invention relates more particularly to a quick-release skewer assembly for securing a bicycle wheel.

### BACKGROUND OF THE INVENTION

Bicycle quick-release mechanisms are utilized to allow a bicycle wheel to be quickly disconnected from the bicycle frame for repair, maintenance, securement to a bike rack, or shipping when the bicycle is not in use. Bicycle wheel quick-release ("QR") mechanisms are available for both the front and rear wheels. Conventional quick-release mechanisms utilize a quick-release lever assembly located on one side of one of the bicycle dropouts - front and/or back. The term "dropout" herein refers to the wheel mount at the fork or rear of the bicycle, whether an open slot or a capturing hole for the axle to be secured within.

The quick-release lever assembly attaches to one end of a skewer shaft. The other end of the skewer shaft is attached to a manually operated nut. In use, to remove a bicycle front wheel, the quick-release lever is operated to an open position. In the open position, the skewer assembly is not clamped to the front forks of the bicycle. To completely remove the bicycle front wheel, in some common designs, the nut on the end of the skewer opposite the QR lever must be loosened at least several turns. The bicycle wheel can then be removed by removing the wheel from downwardly oriented dropout slots in the forks. Note that the design is called a "quick-release", but the secondary retention devices require that the nut be unscrewed extensively such that it really is not quick.

This design also has the disadvantage of the wheel hub axle not being captured in through-holes in the forks. Due to this disadvantage, the front wheel of a bicycle with this type of quick-release design has the potential to fall-off the dropout slots in the forks if an inadequate clamping force of the skewer assembly to the front forks is applied by operation of the quick-release lever of the quick-release assembly. This is of particular concern where disc brakes, in lieu of rim brakes, are utilized. On rim brakes, the moment arm from the axle is much greater and is about the same as the radius of the wheel, so the applied braking force at the rim is relatively small. However, on disc brakes, which are located proximal the hub axle, the moment arm about the axle is much smaller than the radius of the wheel, so the applied forces on the wheel brake disc by the brake pads are much larger. In addition, these applied forces by the brake pads may be oriented in a generally downward direction, if the brake pads are mounted aft of the lower portion of the forks.

Due to this configuration, there is a potential for bicycle front wheels with disc brakes and downwardly oriented dropout slots to have the front wheel come off during use of the bicycle, particularly when the tool-less quick-release assembly has not been properly adjusted to provide an adequate clamping force. Breakage of the dropout tabs and/or the jacking out of the axle from the vehicle frame member may also result during use, potentially causing injury to the rider. Due to this risk, instead of using conventional open dropout slots, some bicycle structures have through-holes instead of dropout slots. However, this dropout design requires the skewer rod to be removed from the fork through the through-holes in order to remove the wheel. To facilitate this, a manually operated nut may be attached to the skewer rod, which may be threaded into the quick-release assembly. The manually operated nut in this type of fork design must be unscrewed completely to allow the skewer rod to be disengaged from the component it is threaded into. Once this occurs, the skewer rod is removed, which allows the bicycle front wheel to be removed from the front forks (and parts to be lost). To reinstall the front wheel, the bicycle wheel is placed between the front forks and the manually operated nut with the attached skewer rod is threaded into the appropriate component. However, the unscrewing (or loosening) and tightening of the manually operated nut while also properly locating the wheel between the forks may be difficult to accomplish consistently and adequately. In addition, the thread engagement of the skewer rod to the component the skewer rod threads into must be of a proper length in order to provide a proper clamping force of the QR skewer assembly to the forks when the quick-release lever is closed. Adequate and consistent tension with the nut and skewer is not always obtained, especially by an inexperienced user.

Accordingly, a need exists in the art for a bicycle wheel quick-release skewer assembly that utilizes vehicle dropouts or rear mounts with through-holes instead of dropout slots that easily allows a bicycle wheel to be removed from the dropouts and reinstalled to the without having to loosen (and completely remove in some instances) and tighten a manually operated nut attached to the tensioning member. A need also exists in the art for a bicycle quick-release mechanism that utilizes through-holes instead of dropout slots that allows for reinstallation of the bicycle front or rear wheel that does not require precise hand tightening of the manually operated nut in order to achieve a proper clamping force of the bicycle quick-release skewer assembly.

Disc brake mounts are secured near the dropouts to secure the disc brake mechanism. At times, the user may wish to change the size of the brake disc, requiring the user to secure an adaptor to the mount to align the brake pad mechanism with the different brake disc. For example, the user may move from a 140mm disc to a 160mm disc in order to have increased leverage for additional stopping power. Alignment of the brake pad mechanism is vital to a smooth, free-running wheel and to effective braking. However, this can be difficult with a conversion to a different size disc. Removing the heat from the disc brake mechanism can also prove to be difficult.

Further information pertaining to the prior art can be found in WO 2006/138699 that discloses a clamp for securing an item includes a locking rod, first and second clamping members, and a retainer. The locking rod includes an elongated body and a locking member connected to a first end of the elongated body. Specifically, the locking rod may be provided with an elongated body having one or more threaded or toothed portions and one or more flat portions. The locking member is movable between a clamping position and a release position. The first clamping member includes a first opening for receiving a second end of the locking rod body therethrough. The second clamping member is adapted to align with the first clamping member to receive the item therebetween. The retainer is connected to the second clamping member and includes a second opening for receiving the second end of the locking rod body and an interlocking feature for engaging a corresponding interlocking feature on the locking rod body when the locking rod body is in a first rotational position. When the item is positioned between the first and second clamping members and the locking rod is inserted through the first opening and into the second opening and oriented in the first rotational position, moving the locking member from the release position to the clamping position tightens the first and second clamping members into clamping engagement with the item.

US patent 8,382,415 discloses a rapid-engaging, positive locking machine screw mechanism comprises a screw having a head and a body wherein the body includes male threads formed thereon wherein the threaded body has at least one longitudinal segment devoid of threads. A work piece defines a hole having female threads formed therein for receiving the screw and further defines in a portion of the hole, at least one longitudinally extending segment devoid of female threads. The longitudinal screw segment devoid of male threads and the longitudinal hole segment devoid of female threads are arranged such that the screw body is longitudinally received in the hole without engagement of the male screw threads with the female work piece threads. The rapid-engaging, positive locking thread configuration can be applied to a variety of mechanical interfaces. Additionally, thread locking configurations, such as a boos-depression interface, a notch and ridge, etc. can be incorporated to secure the male and female threads.

US 2013/033096 teaches a bicycle wheel quick release assembly that includes an axle having a handle engaged with one end thereof. The handle is operable to alter a working length of the axle and securable to the axle at a variety of radial positions to manipulate the radial direction or clocking of the orientation of the handle relative to a longitudinal axis of the axle.

### SUMMARY OF THE INVENTION

The present invention solves the above need in the art to not require loosing of a manually operated nut in order to remove a skewer rod and precise tightening of a manually operated nut in order to reinstall a skewer rod for frame designs utilizing through-holes instead of dropout slots to retain the wheel hub to the wheel mount - either the forks or the rear mount. This need is satisfied by use of a quick-release skewer assembly. The quick- release skewer assembly only requires a portion of a complete turn, such as quarter turn of a manually operated thumbnut to remove or reinstall the skewer rod, in one embodiment. In another embodiment, a quick-release lever only requires a portion of a turn, such as a quarter turn, to remove or reinstall the tensioning member. The present invention also allows for precise regulation of the clamping force applied to the left and right forks by the quick- release skewer assembly. The invention may be used with either front or rear dropout type mountings to provide an easier mount procedure and more consistent clamping force.

The present invention provides a fastener in accordance with independent claim 1 Preferred embodiments of the invention are reflected in the dependent claims.

In one embodiment, a front portion of a bicycle includes a hub assembly and a skewer assembly; the skewer assembly includes a thumbnut. The front portion of the bicycle also includes a quick-release assembly. The skewer assembly is selectively engagable to the quick-release assembly by selectively aligning opposing threaded portions of the skewer assembly and the quick-release assembly. Portions of the skewer assembly may be removed from the quick-release assembly and the left and right forks by turning the thumbnut a quarter of a turn after the clamping force is released by opening the quick-release lever.

In another embodiment, a front portion of a bicycle includes a fork assembly; the fork assembly including a left fork leg and a right fork leg. The front portion of the bicycle further includes a hub assembly, a skewer assembly, and a quick-release assembly. The quick-release assembly includes a quick-release lever. The skewer assembly is selectively threadably engaged to a right fork bushing by selectively aligning opposing threaded portions of the skewer assembly and the right fork bushing. The right fork bushing is threaded into a hole in a lower portion of the right fork leg. The skewer assembly is capable of being removed from the right fork bushing by turning the quick-release lever a portion of a turn about the axis of the axle.

In a further embodiment, a front portion of a bicycle includes a fork assembly; the fork assembly including a left fork leg and a right fork leg, the fork assembly including a through-hole in a lower portion of the left fork leg and a lower portion of the right fork leg, the left and right fork legs each including a slot in an inboard side of the lower portion of the left and right fork legs. The front portion of a bicycle includes a hub assembly, the hub assembly including a left end portion configured with opposing flat caps (shaped as washers or discs) and a right end portion of the hub assembly is configured with opposing caps. The front portion of a bicycle additionally includes a skewer assembly, the skewer assembly including a skewer rod, the skewer rod being installed within the through-holes in the lower portion of the left fork leg and right fork leg and a quick-release assembly. The left end portion of the hub with opposing caps allows the left end portion to be received in the left fork slot; the right end portion of the hub with opposing flat spots allows the right end portion of the hub assembly to be received in the right fork slot. The front wheel is not capable of being removed from the fork assembly without the skewer rod being removed from the through-holes in the lower portion of the left and right fork legs.

In use, the quick-release lever is operated to orient the quick-release lever from a closed orientation in which the quick-release (QR) skewer assembly is clamped to the front forks, to an open orientation in which the QR assembly is not clamped to the front forks. In one embodiment, a thumbnut in contact with the right fork leg is rotated a partial turn (approximately one-quarter turn) to allow the skewer assembly to be removed from the wheel hub assembly and from through-holes in the front forks. Reinstallation is the reverse of the above. In another embodiment, a quick-release lever proximal the fork leg is rotated a partial turn (e.g., one-quarter turn) to allow the skewer assembly to be removed from the wheel hub assembly and from through-holes in the front forks. Reinstallation is the reverse of the above. The same applies to the rear dropouts.

The invention herein may also be more broadly applicable to most types of vehicles, or to fasteners in general. The fastener according to the invention as defined by claim 1 includes a shaft and an engagement mechanism. The shaft has a longitudinal axis and an end with multiple teeth in series one after another partially along the longitudinal axis. Each tooth runs transverse to the longitudinal axis, the teeth being disposed on at least a first side of the shaft. The shaft includes an adjacent second side that is recessed relative to the first side, such that it does not extend as far from the longitudinal axis of the shaft.

The engagement mechanism is configured to engage the multiple teeth on the shaft when the shaft is oriented in a first rotational position. The mechanism disengages the teeth on the shaft when the shaft is oriented in a second rotational position. The engagement mechanism includes teeth that selectively engage the shaft teeth in the first rotational position.

In a preferred embodiment, the shaft includes a second set of teeth extending along a third side of the shaft opposite the first-side teeth and adjacent to the second, recessed side of the shaft. The shaft also includes a fourth side, recessed relative to the third side teeth and relative to the first-side teeth. Preferably, the second and fourth sides do not include teeth.

The shaft further includes a head on the end thereof beyond the teeth. The head extends from the longitudinal axis of the shaft further than the second side. The head extends outwardly further than the second side in the direction of the first side, such that the head will not engage with the teeth from the engagement mechanism. Thus, the head restricts rotation of the shaft unless the head is extended beyond the teeth of the engagement mechanism. This helps ensure proper tension engagement. The engagement mechanism includes two opposite sets of teeth that engage the first and second sets of shaft teeth upon rotation of the shaft to the second rotational position.

A tensioning mechanism may be coupled to at least one of the shaft and the engagement mechanism. The tensioning mechanism operates to place tension on the shaft after the engagement mechanism is in the second rotational position with the teeth engaged. The tensioning mechanism includes a cam and a lever rotatable with the cam to move the cam and the engagement mechanism toward and away from the shaft. The tensioning mechanism further includes a secondary retention member to restrain the movement of the lever.

### BRIEF DESCRIPTION OF THE DRAWINGS

Preferred and alternative examples of the present invention are described in detail below with reference to the following drawings:
Figure 1A illustrates an isometric view of a bicycle, including the tensioning members according to an embodiment;
Figure 1B is a rear close-up isometric view of the rear wheel showing the QR lever securing the rear axle in place;
Figure 2A illustrates an isometric view of a quick-release assembly and skewer rod assembly removed from a front fork of a bicycle according to an embodiment;
Figure 2B shows another version of a QR assembly with a tensioning rod released from a QR lever to remove a hub;
Figure 3 illustrates an exploded isometric view of a skewer rod assembly according to an embodiment;
Figure 4 illustrates a detail view of a lower portion of a right fork leg and a portion of a thumbnut looking inward according to an embodiment;
Figure 5 illustrates an exploded isometric view of a quick-release assembly according to an embodiment;
Figure 6 illustrates an isometric view of a quick-release skewer assembly removed from the forks and hub adjacent the front fork of a bicycle according to another embodiment;
Figure 7 illustrates an exploded isometric view of the skewer rod assembly according to an embodiment;
Figure 8A illustrates an exploded isometric view of the quick-release assembly according to an embodiment with a 15mm axle;
Figure 8B is a close-up cross-sectional view of the QR assembly securing the end of a tensioning rod;
Figure 8C illustrates orthographic view of the assembly and cross-section of an embodiment with a 15mm axle;
Figure 9 illustrates an isometric view of a quick-release skewer assembly according to another embodiment in which the tensioning rod is fastened to the QR lever;
Figure 10A illustrates the quick-release lever in a closed orientation according to an embodiment;
Figure 10B illustrates the quick-release lever in an open orientation according to an embodiment;
Figure 10C illustrates the quick-release lever in release orientation according to an embodiment;
Figure 11A illustrates another embodiment in a partially exploded view;
Figure 11B illustrates the exploded detail of the end attachment to secure the tension member;
Figure 12 is an isometric view of a front fork, hub, and brake assembly according to a further embodiment of the present invention;
Figure 13 illustrates the assembly of Figure 12 with the quick-release lever open;
Figure 14 is another view of the assembly with the lever pivoted up to a removal position;
Figure 15 shows the quick-release assembly removed from the forks and hub;
Figure 16 shows the hub removed from the forks;
Figure 17 illustrates the position of the quick-release lever for tension adjustment of the nut on the opposite side from the lever;
Figure 18A shows the assembly in top view, the forks having been partially cut away;
Figure 18B is a cross-section view of the hub and QR assembly of Figure 18A;
Figure 19A illustrates an isometric view of a QR and skewer of an embodiment;
Figure 19B illustrates an exploded view of the QR and skewer of Figure 19A;
Figure 19C illustrates an exploded view of an alternate embodiment of a QR assembly;
Figure 20 shows the details of the clocking washer from Figures 19A-C;
Figure 21 illustrates a side-elevational view of a fork and brake mount assembly;
Figure 22 illustrates an exploded view of the fork and brake mount assembly;
Figure 23 illustrates the front wheel braking forces;
Figure 24 is an isometric view of another embodiment of the quick-release assembly with a hollow skewer;
Figures 25A-C illustrate additional views of the assembly of Figure 24 connected to fork legs;
Figure 26 is a close-up view of the end of the skewer assembly of Figure 24;
Figures 27A-C are detail views of the lever end of the skewer of Figure 24;
Figure 28 illustrates alternate embodiments of skewer tensioning systems;
Figure 29 is a partial sectional view of a further embodiment of a quick-release assembly;
Figure 30 is a close-up view of the limit mechanism of the assembly of Figure 29.
Figure 31 is a view of a tension lever of the present invention; and
Figure 32 is a part view of a quick-release assembly housing.

### DETAILED DESCRIPTION OF THE PREFERRED EMBODIMENTS

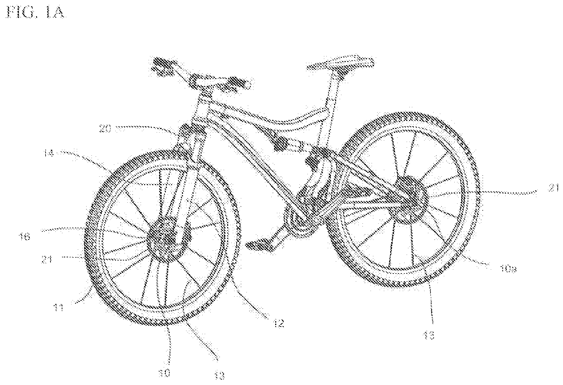

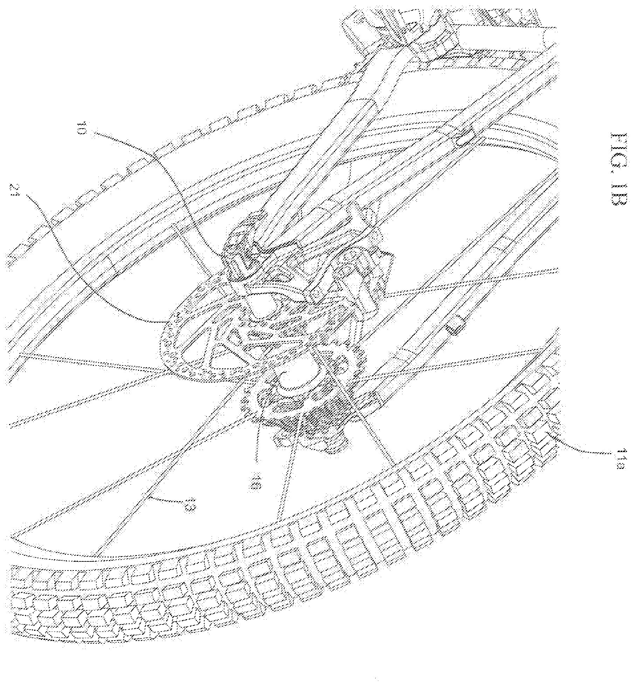

Figures 1A and B illustrate a bicycle having disc brakes, dropouts, and QR levers front and rear. The bicycle includes a quick-release skewer (i.e., tension rod assemblies) assemblies 10, 10a, a front wheel 11, rear wheel 11a, a hub assemblies 16 (partially hidden behind the brake discs in Figure 1A), and a fork assembly 20. The front portion of the bicycle further includes a bicycle left fork leg 12, a bicycle right fork leg 14, bicycle spokes 13, and brake discs 21.

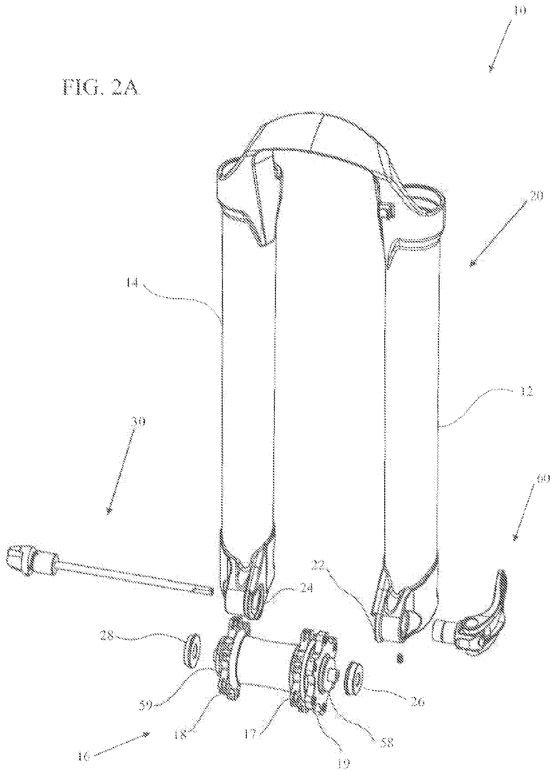

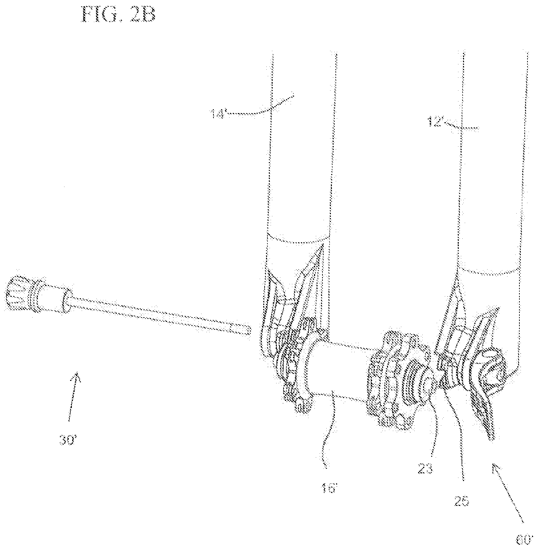

Figure 2A illustrates an isometric view of a quick-release skewer assembly 10 and a fork assembly 20 looking toward a rear direction according to an embodiment. The quick-release skewer assembly of Figures 2 through 5 is primarily intended for hub assemblies 16 with a 9mm axle, but the embodiments of Figures 2-5 are not limited to this size axle. As illustrated in Figure 2, the quick-release skewer assembly 10 is mounted to a bicycle left fork leg 12 and a bicycle right fork leg 14. Located between the left bicycle fork leg 12 and the right bicycle fork leg 14 is the wheel hub assembly 16. The wheel hub assembly 16 includes a rotating portion, which rotates with the front wheel tire, brake disc, and spokes, and a non-rotating portion, which is mounted to the left 12 and right 14 fork legs. The rotating and non-rotating portions of the wheel hub assembly 16 are separated by bearings (not shown).

The left bicycle fork leg 12 includes a horizontal slot 22 on an inboard side of the left fork leg 12. The right bicycle fork leg 14 includes a horizontal slot 24 on an inboard side of the right fork leg 14. The slot on the left fork leg 22 and the slot on the right fork leg 24 are oriented in a forward direction. The left 22 and right 24 slots mate with end caps 26, 28 that are positioned against opposing flat surfaces 58, 59 on each end of the non-rotating portion of the wheel hub assembly 16. The end caps are essentially discs or washers the help disperse the load from the hub to the fork over a broader area. They also do not rely solely on shear to hold the hub in place, as they fit within the forwardly extending recesses or slots 22, 24. The forward orientation of the slots counters the load placed upon the axle and hub by the brakes being applied to the brake discs. As the brakes are applied, the tire, wheel, and spokes pull the hub rearwardly into the slots. The resultant forces on the brake disc also pull the hub downwardly and/or rearwardly. In either case, the slots resist the forces and spread the load to the end caps 26, 28.

The wheel hub assembly 16 includes left 17 and right 18 spoke flanges for attaching wheel spokes 13 (Figure 1) to the wheel hub assembly 16. The wheel hub assembly 16 further includes a disc brake flange 19 for attaching a brake disc 21 (Figure 1) to the disc brake flange 19. Located generally within the hub assembly 16 is a skewer rod assembly 30. Located outboard of the left bicycle fork leg in Figure 2 is a quick-release (QR) assembly 60. A left end cap 26 with opposing flat spots abuts the left end portion of the hub assembly 16 and is mounted in the left fork leg slot 22. A right end cap 28 with opposing flat spots abuts the right end portion of the hub assembly 16 and is mounted in the right fork slot 14 as discussed above.

Figure 2B is similar. Note that the slots in the fork legs accommodate longer axles 23 within inset recesses or slots 25. This form of the assembly can accommodate conversion of previous hub and axle assemblies to the improved arrangement with better handling of the braking forces.

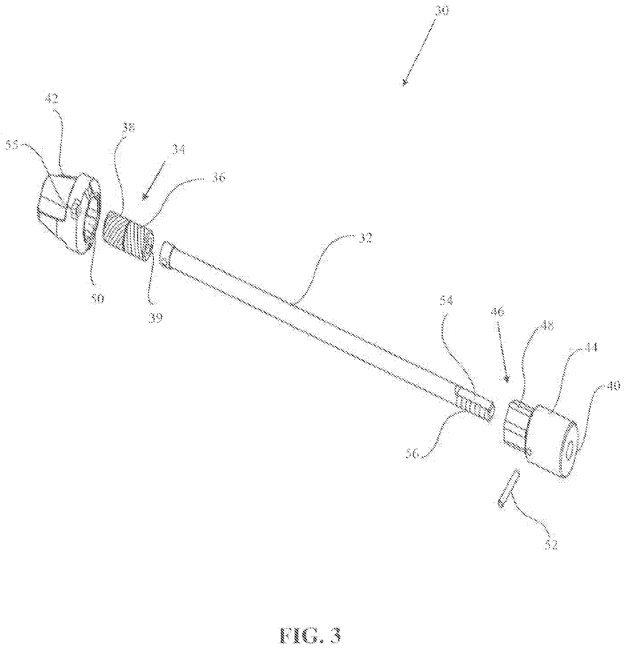

Figure 3 illustrates an exploded isometric view of the skewer rod (i.e., tension rod) assembly 30 according to an embodiment of the present invention. As illustrated in Figure 3, the skewer assembly 30 includes a skewer rod 32. The skewer rod 32 is installed through a through-hole in the left 12 and right 14 fork legs and within a through-hole in an axle of the wheel hub 16 (See also Figure 2). In Figure 3 an end of the skewer rod 32 that is installed proximal the right fork leg 14, abuts against an adjusting cylinder 34. The adjusting cylinder 34 illustrated has external threads on an inboard portion 36 of the adjusting cylinder 34. The adjusting cylinder 34 has external threads on an outboard portion 38 of the adjusting cylinder 34. The threads on the inboard portion 36 and outboard portion 38 may be either left-handed, or right-handed. The external threads on the inboard portion 36 of the adjusting cylinder 34 allows the adjusting cylinder 34 to be threaded into a threaded bore in an outboard portion 46 of an adjusting sleeve 40. The external threads on the outboard portion 38 of the adjusting cylinder 34 allow the adjusting cylinder 34 to be threaded into a threaded bore on a thumbnut 42. A hex through-hole 39 in the adjusting cylinder 34 allows an Allen wrench (i.e., hex wrench) to be inserted through a hole in an outboard end of the thumbnut 42 into the hex hole 39 in the adjusting cylinder 34 to adjust the amount of thread engagement of the external threads on the inboard portion 36 of the adjusting cylinder 34 to the threaded bore in the outboard portion 46 of the adjusting sleeve 40. The adjusting cylinder 34 may be installed so that the inboard portion 36 and outboard portion 38 are reversed from the orientation shown in Figure 3. The adjusting sleeve 40 has an inboard portion 44 in addition to the outboard portion 46. The inboard portion 44 of the adjusting sleeve fits inside the through-hole (Figure 2) in the right fork leg 14. The outboard portion 46 of the adjusting sleeve 40 has an outer surface configured as wide and narrow flats 48. The wide and narrow flats 48 forming a hexagonal outer surface on the adjusting sleeve 40 outboard portion 46 fit into mating wide and narrow flats 50 forming a hexagonal inner surface of the thumbnut 42. Accordingly, when the thumbnut 42 is rotated, the adjusting sleeve 40 is also rotated. As illustrated in Figure 3, a pin 52 secures the adjusting sleeve 40 to the skewer rod 32. Therefore, when the thumbnut 42 is rotated, the skewer rod 32 also rotates. The end of the skewer rod 32 opposite the thumbnut in Figure 3 has flats 54 on opposing sides of an outer surface of the end of the skewer rod 32. The same end of the skewer rod 32 in Figure 3 also has threaded circumferential portions 56 on opposing sides of an outer surface of the end of the skewer rod 32. Figure 3 also illustrates a protrusion 55 on an outer surface of the thumbnut.

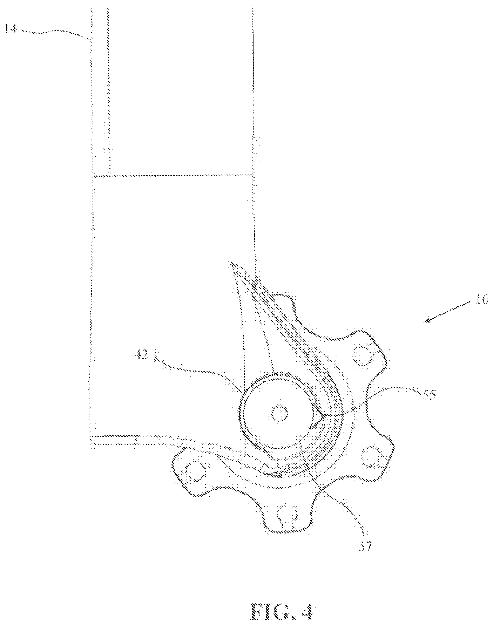

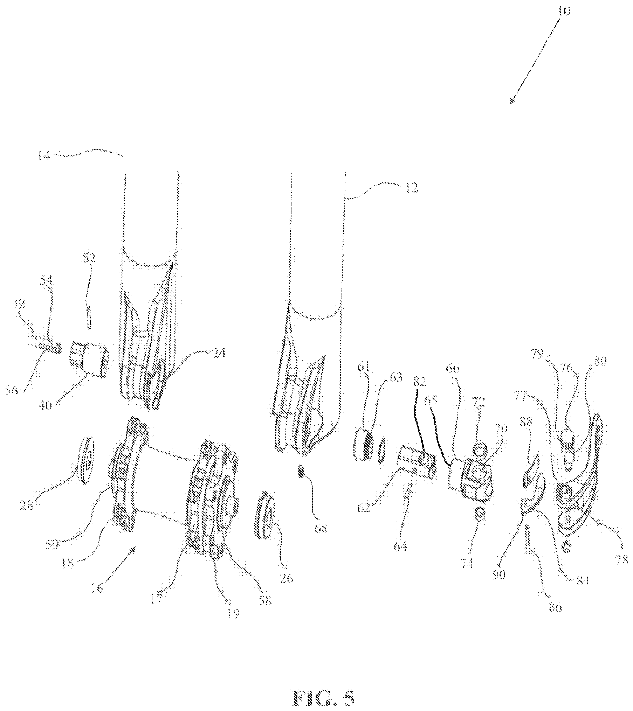

Figure 4 illustrates a detail view of a lower portion of the right fork leg 14 and a portion of the thumbnut 42 looking inward according to an embodiment. As illustrated in Figure 4, a protrusion 55 exists on an outer circumference of the thumbnut 42. As illustrated in Figure 4, the protrusion 55 is located within a circumferential recess 57 on an outboard side of a lower portion of the right fork leg. The protrusion 55 on the outer circumference of the thumbnut 42 acts in cooperation with the circumferential recess 57 on the right fork leg to prevent the thumbnut 42 from being rotated more than a quarter turn in a preferred embodiment. The reason for not allowing the thumbnut 42 to turn more than a quarter turn will be explained further in the description of Figure 5 below.

Figure 5 illustrates an exploded isometric view of the quick-release assembly 60 according to an embodiment. As illustrated in Figure 5, the end of the skewer rod 32 in Figure 3 (with flats 54 and threaded circumferential portions 56 on opposing sides of an outer surface of the skewer rod 32) engages a partially threaded bore in a partially internally threaded block 62. The end of the skewer rod 32 in Figure 3 with flats 54 and threaded circumferential portions 56 is installed through a through-hole in the left fork bushing 61 into the partially threaded bore of the partially internally threaded block 62. The skewer rod 32 is oriented in the bore with the flats 54 of the skewer rod 32 aligned with the opposing threaded portions of the partially internally threaded block 62 such that it slides past the threaded bore portions without interference. A pin 64, inserted into the partially internally threaded block 62 and that protrudes into the bore, acts as a stop to allow the end of the skewer rod 32 to be inserted into a proper depth of partially threaded bore of the partially internally threaded block 62. This proper depth insertion of the skewer rod 32 assures that the quick-release skewer assembly 10 is properly clamped to the left 12 and right 14 fork legs.

Rotating the thumbnut 42 (see also Figure 4) and attached skewer rod 32 causes the threaded circumferential portions 56 on the skewer rod 32 to threadably engage the opposing threaded portions of the partially internally threaded block 62. As also illustrated in Figure 5, the partially internally threaded block 62 is matingly housed within a hole 65 in the housing 66. The partially internally threaded block 62 is free to move axially within the hole 65 of the partially internally threaded cylinder housing 66. However, the block 62 cannot rotate axially within the housing 66 as the square cross section of the block 62 mates with the internally square hole 65. An outboard threaded land 63 on the left fork bushing 61 threads into a threaded portion of an inboard portion of the hole 65 in the housing 66. A setscrew 68 prevents relative motion between the housing 66 and the left fork leg 12 by the setscrew threading into the left fork leg 12 and the left fork bushing 61.

Figure 5 also illustrates the housing 66 has a vertical through-bore 70 in which upper 72 and lower 74 bushings are installed and in which a camshaft 76 rotates. The camshaft 76 is inserted through a serrated hole 77 in a quick-release (QR) lever 78. A serrated land 79 on a top portion of the camshaft 76 engages the serrated hole 77 in the QR lever. The serrated land 79 engagement with the serrated hole 77 in the QR lever 78 causes the camshaft 76 to rotate when the QR lever 78 is operated. A cam 80 on the camshaft 76 rides in a hole 82 in the partially internally threaded block 62. In operation, when the QR lever 78 is operated, the cam 80 is caused to rotate about the upper 72 and lower 74 bushings installed in the housing 66. This rotation of the cam 80 in the hole 82 in the partially internally threaded block 62 causes the partially internally threaded block 62 to follow the cam 80 rotational movement. The cam 80 rotational movement causes the block 62 to move in an axial direction. As the outer surface of the right side of the skewer rod 32 is threadably engaged to the opposing threaded portions of the partially internally threaded block 62, the skewer rod 32 is also caused to move axially. This axial movement of the skewer rod 32 causes a clamping force of the skewer rod assembly 30 and QR assembly to the right 12 and left fork legs 14 to be selectively applied and relieved. A QR locking lever 84 is pivotally mounted on a QR locking lever pin 86. A pointed end 90 of the QR locking lever 84 is biased against the housing 66 by a leaf spring 88. The biasing of pointed end 90 of the QR locking lever 84 against the housing 66 by the leaf spring 88 prevents the QR lever 78 from being operated if the locking lever 84 is not depressed. By operating the QR locking lever, the pointed end 90 of the QR locking lever 84 is no longer in contact with the housing 66 and the QR lever 78 is free to be operated. This locking lever 84 functions as a backup safety feature. The locking lever 84 may be omitted in some embodiments such that the cam action is relied upon to retain the QR lever in the closed configuration.

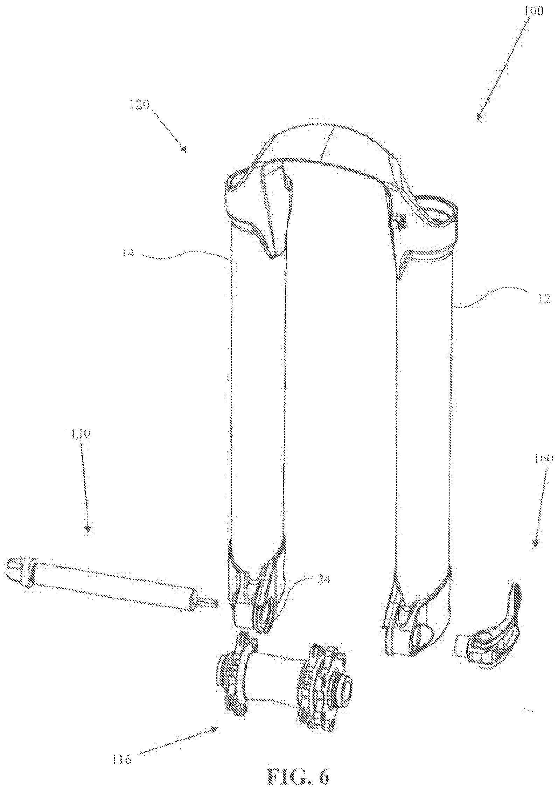

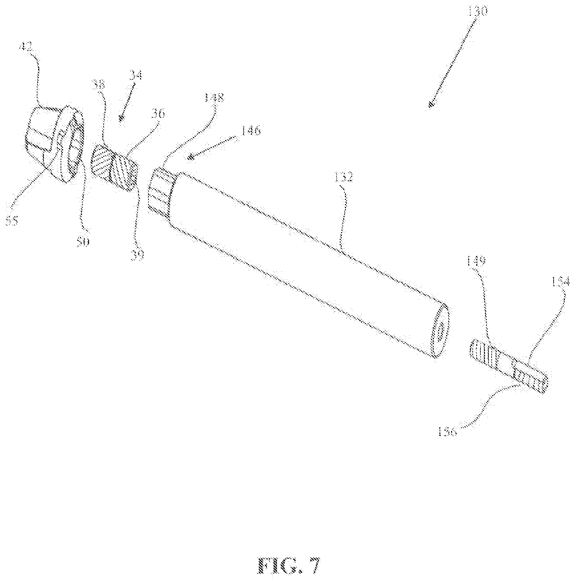

Figure 6 illustrates an isometric view of a quick-release skewer assembly 100 looking toward a rear direction of a bicycle according to another embodiment. The quick-release skewer assembly 100 of Figures 6-8 is primarily intended for hub assemblies 116 with a 15 mm axle, but the embodiments of Figures 6-8 are not limited to this size axle. The description of the quick-release skewer assembly 100 of Figure 6 is the same, for the most part as Figure 2, so parts that are the same as described in Figure 2 will not be described again. The main difference between the quick-release skewer assembly 10 of Figure 2 and the quick-release skewer assembly 100 of Figure 6 is that the quick-release skewer assembly 100 of Figure 6 does not utilize the left end cap 26 and right end cap 28 as illustrated in Figure 2. This is due to the fact that since the quick-release skewer assembly 100 of Figure 5 utilizes a larger axle, the larger axle distributes transmitted forces to the left 12 and right 14 fork legs over a larger area, hence there is no need for the left 26 and right 28 end caps that are used in FIG 2 to distribute forces over a larger area from the smaller axle of Figure 2. Also, as described below in the description of Figure 7, the skewer rod assembly 130 of the embodiment of Figure 3 has some differences in design from the skewer rod assembly 30 of the embodiment of Figure 3. Figure 6 also illustrates the fork assembly 120 and the quick-release assembly 160.

Figure 7 illustrates an exploded isometric view of the skewer rod assembly 130 according to an embodiment. In Figure 7, parts that are the same as in Figure 3 will not be again described, unless they are attached to a part that is different from Figure 3. In addition, parts in Figure 7 that are the same as in Figure 3 will utilize the same reference number. As illustrated in Figure 7, the skewer assembly 130 includes a skewer rod 132. The skewer rod 132 is installed through a through-hole in an axle of the wheel hub 116. In Figure 7 an end of the skewer rod 132 that is installed proximal the right fork leg 14 abuts against an adjusting cylinder 34. The adjusting cylinder 34 illustrated has external threads on an inboard portion 36 of the adjusting cylinder 34. The adjusting cylinder 34 has external threads on an outboard portion 38 of the adjusting cylinder 34. The threads on the inboard portion 36 and outboard portion 38 may be either left-handed, or right-handed. The external threads on the inboard portion 36 of the adjusting cylinder 34 allows the adjusting cylinder 34 to be threaded into a threaded bore in the skewer rod 132. The external threads on the outboard portion 38 of the adjusting cylinder allows the adjusting cylinder 34 to be threaded into a threaded bore on a thumbnut 42. A hex through-hole 39 in the adjusting cylinder 34 allows an Allen wrench to be inserted into the hex hole 39 through a hole in an end of the thumbnut 42 to adjust the amount of thread engagement of the external threads on the inboard portion 36 of the adjusting cylinder 34 to the threaded bore in the skewer rod 132, thus adjusting the relative position of the rod 132 to the thumbnut 42. The adjusting cylinder 34 may be installed so that the inboard portion 36 and outboard portion 38 are reversed to the orientation shown in Figure 7. An outboard portion 146 of the skewer rod 132 proximal the right fork leg 14 has an outer surface configured as wide and narrow flats 148. The wide and narrow flats 148 on an outer surface of the skewer rod 132 outboard portion 146 fit into mating wide and narrow flats 50 on an inner surface of the thumbnut 42. Accordingly, when the thumbnut 42 is rotated, the skewer rod 132 is also rotated. A threaded shaft 149 is threadably engaged into a threaded bore on the end of the skewer rod 132 in Figure 7. As also illustrated in Figure 7, the end of the threaded shaft 149 has flats 154 on opposing sides of an outer surface of the end of the threaded shaft 149. The end of the threaded shaft 149 in Figure 7 also has threaded circumferential portions 156 on opposing sides of its outer surface.

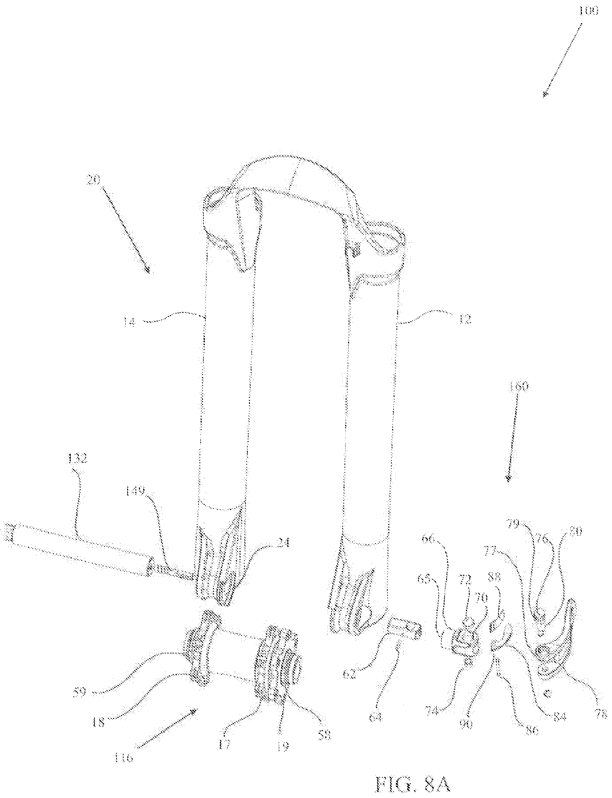

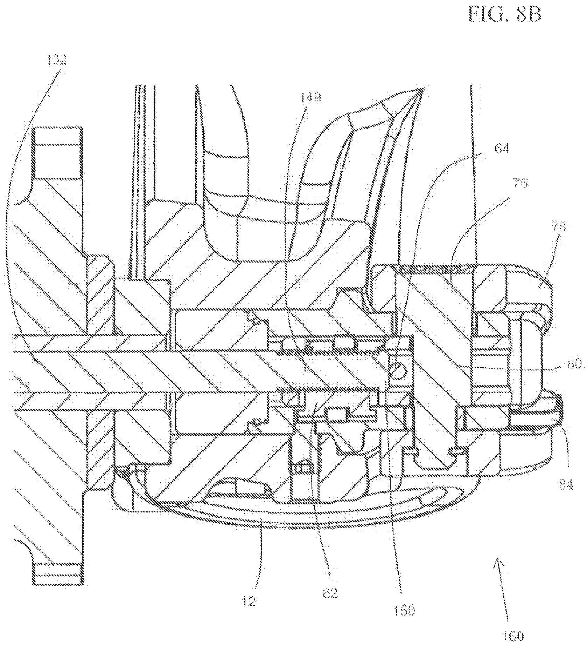

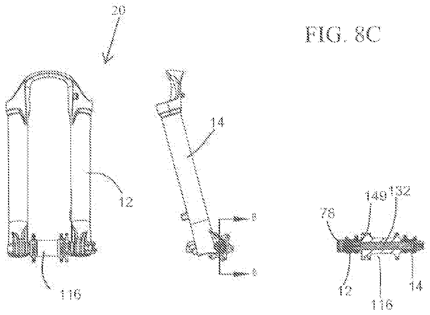

Figure 8A illustrates an exploded isometric view of the quick-release assembly 160 according to an embodiment. The description of the quick-release assembly 160 is virtually identical to Figure 5, so the parts of the quick-release assembly 60 of Figure 5 that are the same in Figure 8 will not be descried again. The only difference between the quick-release assembly 60 of Figure 5 and the quick-release assembly 160 of Figure 8 is that a threaded smaller shaft 149 threadably engages the partially internally threaded block 62, instead of the skewer shaft 32 directly threadably engaging the partially internally threaded block 62, as was taught by Figure 3. The protrusion 55 on the thumbnut 42, which is located within the circumferential recess 77 on the right fork leg as taught by Figure 4, also applies to the embodiment of Figures 6-8.

Figure 8B shows the parts in a close-up cross-sectional view of the attachment of the tension rod (skewer rod 132) to the second embodiment of the QR assembly 160. Note that the end of the threaded shaft 149 of the skewer rod 132 includes a non-threaded head 150. This head helps ensure that the skewer rod 132 is inserted all the way. The rod will not turn relative to the QR assembly 160 if the head does not extend past the complementary threads in the threaded cylinder 62. Thus, upon insertion, the end of the rod 132 abuts pin 64. At this point, head 150 clears the threads of the cylinder 62 such that the rod can be turned a partial turn (preferably a quarter turn) to engage the treads.

Figure 8C illustrates the general assembly of Figures 8A and B in an assembled configuration in the fork and hub.

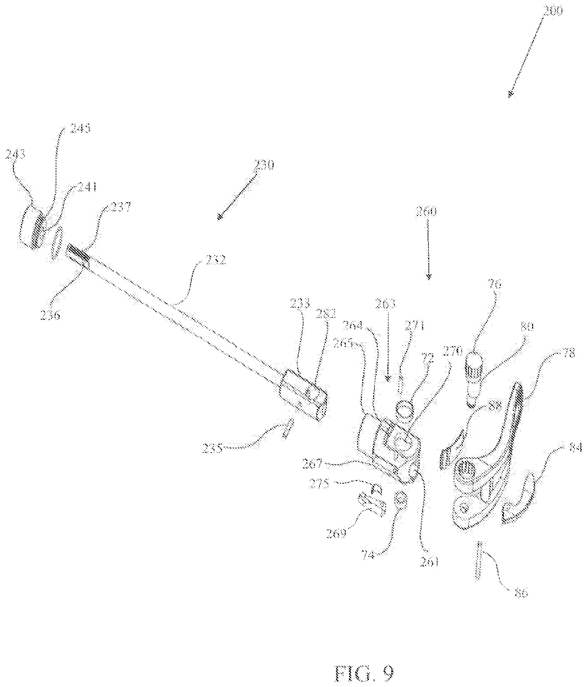

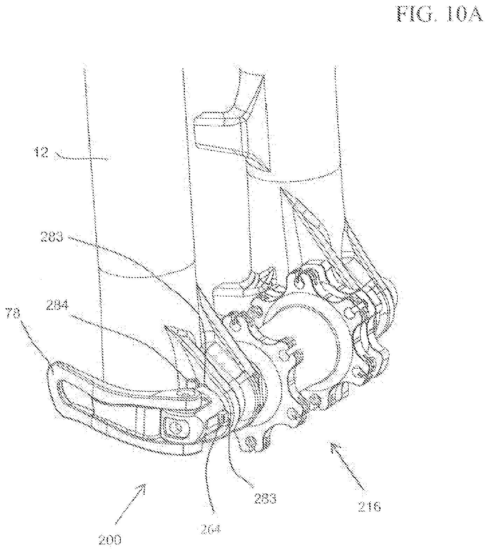

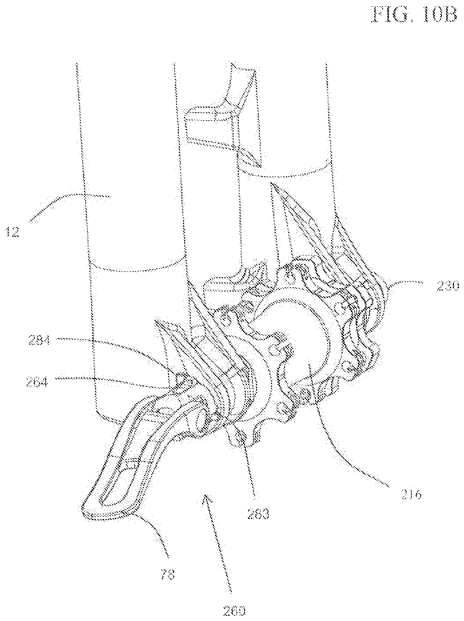

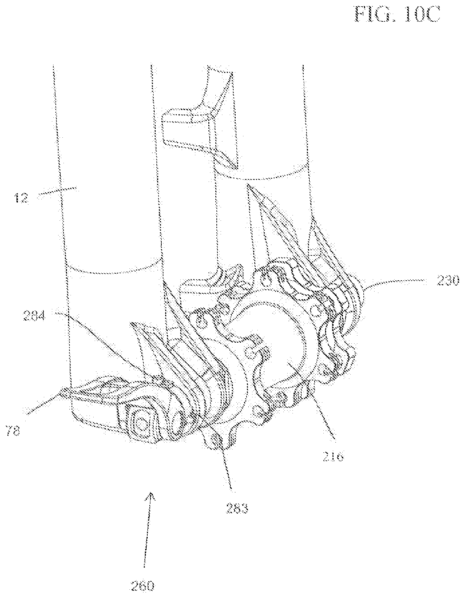

Figure 9 illustrates an isometric view of a quick-release (QR) skewer assembly 200 according to another embodiment. The quick-release skewer assembly 200 of Figures 9 and 10 is for an embodiment in which the QR assembly 260 is removed with the skewer assembly 230 through the left fork leg 12 to allow the bicycle wheel removal. This is in contrast to the embodiments of Figures 2-5 and 6-8 in which the skewer assembly 30 of Figures 2-5 and the skewer assembly 130 of Figures 6-8 are removed through the right fork leg 14 with the thumbnut 42.

As illustrated in Figure 9, a skewer assembly 230 of a QR skewer assembly 200 includes a skewer rod 232. A rectangular-shaped cam follower 233 is attached to the end of the skewer rod 232 in Figure 9 by a pin 235. On the opposite end of the skewer rod 232 in Figure 9 is located an end portion with opposing flats 236 and opposing circumferential threaded portions 237. The opposing flat 236 and circumferentially threaded portions 237 on the end portion of the skewer rod 232 in Figure 9 are selectively engageable to opposing threaded portions in the thumbnut situated on the outer side of the right fork (not shown).

Figure 9 also illustrates the quick-release assembly 260 according to an embodiment. The description of the quick-release assembly 260 illustrated in Figure 9 is the same in many respects to the quick-release assembly 60 of Figure 5, so the parts that are described in Figure 5 and are the same in Figure 9 will generally not be described again. As illustrated in Figure 9, the rectangular-shaped cam follower 233 attached to the end of the skewer rod 232 by pin 235 fits into a rectangular-shaped hole 261 in a cam follower housing 263. The cam follower housing 263 includes a round inboard portion 265 and a rectangular outboard portion 267. The round inboard portion 265, along with the end cap 243 threaded thereto, is installed within a bore (Figure 2) on the right fork bushing 243. A lever 269 is mounted by a pin 271 into a groove 273 in a side of the rectangular outboard portion 267 of the cam follower housing 263. A spring 275 biases the lever 269 outward. The lever 269 is biased into a groove in the left fork leg 12 to retain the cam follower housing 263 to the groove in the left fork leg 12. A protrusion 264 on an outer surface of the cam follower housing 263 is located within a ccircumferential recess 283 (Figure 10A) in the left fork leg 12. The cam follower housing 263 has a through-bore 270 in which upper 72 and lower 74 bushings are installed and in which a camshaft 76 rides. A cam 80 on the camshaft 76 rides in a hole 282 in the rectangular-shaped cam follower 233. In operation, when the QR lever 78 is operated, the cam 80 is caused to rotate about the upper 72 and lower 74 bushings installed in the cam follower housing 263. This rotation of the cam 80 causes the rectangular-shaped cam follower 233 to follow the cam 80 rotational movement. The cam 80 rotational movement causes the cam follower 233 and attached skewer rod 232 to move in an axial direction. This axial movement of the skewer rod 232 causes a clamping force of the skewer rod assembly 30 and QR assembly to the right 12 and left fork legs 14 to be selectively applied and relieved.

Figure 10A illustrates the QR lever 78 in the closed position with a clamping force applied by the QR skewer assembly 200. Figure 10A also illustrates the outwardly biased protrusion 264 on the cam follower housing and the recesses 283 into which the protrusion drops to stop excessive rotation of the QR lever 78. Alternatively, a recess along the circumferential region of the desired turn of the lever may be used along with a tab or nub on the QR housing is used. A stop tab 284 is also used to positively locate the end of the lever turn.

Figure 10B illustrates the QR lever 78 in the open position with the clamping force applied by the QR skewer assembly 200 relieved. Once the clamping force is relieved, the QR assembly 260 and the skewer assembly 230 may be rotated 90 degrees so the QR lever is oriented vertically as illustrated in Figure 10C. Once the QR assembly 260 and the skewer assembly 230 is rotated 90 degrees, the skewer rod 232 opposing flat and circumferentially threaded portions are aligned so that the opposing circumferentially threaded portions are not engaged with the opposing threaded portions in the bore 241 on the right fork bushing 243. In this orientation, the skewer assembly 230 and the QR assembly 260 may be removed from the hub assembly 216 and the wheel may be removed from the bicycle.

In use of the embodiments of Figures 2-5, a user operates the QR lever 78 from a closed position, in which a clamping force is applied by the QR skewer assembly 10 to the left 12 and 14 fork legs in order to retain the QR shaft assembly and the wheel 11 to the left 12 and right 14 fork legs, to an open position, in which the clamping force is relieved. Once the clamping force is relieved, the thumbnut 42 is rotated 90 degrees in order to disengage the threaded circumferential portions 56 on opposing parts of an outer surface of the right side of the skewer rod 32 from the opposing threaded portions in the partially internally threaded hole in the partially internally threaded block 62. Once the opposing threaded portions in the skewer rod 32 and the partially internally threaded block 62 are disengaged, the threaded nut 42 and the skewer rod assembly 30 may be removed from the hub assembly 16. Once the threaded nut 42 and the skewer rod assembly 30 are removed, the wheel 11 may then be removed from the front fork legs 12, 14. Reinstallation of the wheel is the reverse of the above.

The protrusion 55 on the thumbnut 42, which moves within the circumferential recess 57 in a lower outboard portion of the right fork leg 14, prevents the thumbnut 42 from being rotated more than 90 degrees in order to assure that the skewer rod 32 flats 54 are aligned with the threaded portion in the partially internally threaded block 62. This alignment allows the skewer rod 32 to be removed from the partially internally threaded block 62. Reinstallation of the wheel 11 is the reverse of the above.

In order to assure a proper clamping force of the QR skewer assembly 10 to the left 12 and right 14 fork legs, an Allen wrench may be inserted through a hole in an end of the thumbnut 42. The Allen wrench engages the hex through-hole 39 in the adjusting cylinder 34. By turning the Allen wrench engaged in the hex through-hole 39 in the adjusting cylinder 34, the distance along a longitudinal axis of the adjusting cylinder 34 between the thumbnut 42, which clamps to the right fork leg 14 and the ppartially internally threaded cylinder housing 66, which clamps to the left fork leg 12 may be increased, to decrease the clamping force, or decreased, to increase the clamping force.

The embodiment of Figures 6-8 operates in a similar manner. One difference of the embodiment of Figures 6-8 with the embodiment of Figures 2-5 is that the embodiment of Figures 6-8 does not utilize an adjusting sleeve 40 (Figure 3) in the skewer assembly 30. Instead, the function of the adjusting sleeve 40 of Figure 3 has been incorporated into the skewer rod 132 of Figure 7 in the embodiment of Figures 6-8. The other difference between the embodiment of Figures 2-5 and 6-8 is that the opposing flats 54 and threaded circumferential 56 portions on the right side of the skewer rod in Figure 3 have been replaced in Figure 7 with a separate threaded shaft 149 with opposing flats 54 and threaded circumferential 56 portions that mate into the partially internally threaded block 62.

In use of the embodiments of Figures 9 and 10, a user operates the QR lever 78 from a closed position (Figure 10A), in which a clamping force is applied by the QR skewer assembly 200 to the left 12 and 14 fork legs in order to retain the QR skewer assembly 200 and the wheel 11 to the left 12 and right 14 fork legs, to an open position (Figure 10B), in which the clamping force is relieved. Once the clamping force is relieved, the QR lever 78 is rotated 90 degrees (Figure 10C) in order to disengage the threaded circumferential portions 237 on opposing parts of the skewer rod 232 in Figure 9 from the opposing threaded portions in the 241 on the right fork bushing 243. Once the opposing threaded portions on the skewer rod 232 and in the bore 241 on the right fork bushing 243 are disengaged, the QR lever 78 and the skewer rod assembly 230 may be pulled-out of the hub assembly 16 and the front fork legs 12, 14. Once the QR lever 78 and the skewer rod assembly 230 are removed, the wheel 11 may be removed from the front fork legs 12, 14. Reinstallation of the wheel is the reverse of the above.

The protrusion 264 on the cam follower housing 263, which moves within the circumferential recess 283 (Figure 10A) in the left fork leg 12, prevents the QR lever 78 from being rotated more than 90 degrees in order to assure that the opposing flats 236 on skewer rod 232 is aligned with the opposing circumferential threaded portions in the bore 241 in the right fork bushing 243 so the skewer rod 232 may be removed from the right fork bushing 243. Reinstallation of the wheel 11 is the reverse of the above.

In order to assure a proper clamping force of the QR skewer assembly 200 to the left 12 and right 14 fork legs, the length of thread engagement of the partial circumferential threaded portions 237 on the skewer rod 232 and the partially threaded portions in the bore 241 of the right fork bushing 243 may be varied. By varying this length of thread engagement, the distance between the right fork bushing 243, which clamps to the right fork leg 14 and the cam follower housing 263, which clamps to the left fork leg 12 may be increased, to decrease the clamping force, or decreased, to increase the clamping force.

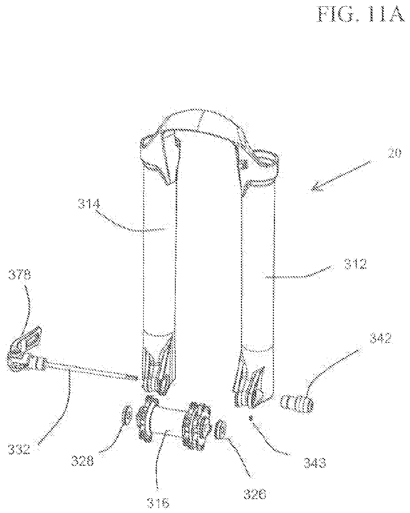

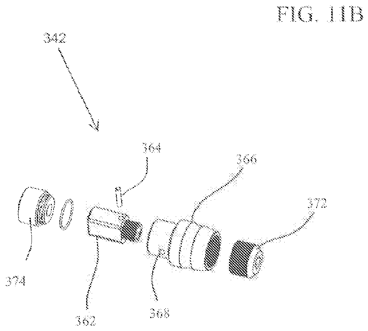

Figures 11A and B illustrate an alternate embodiment of the QR tension rod assembly of the present invention. In this embodiment, the tension rod 332 is fixed to the QR lever 378. A separate fixed nut 342 is fixed within the fork leg (preferably the left leg 312) and held in place with a setscrew 343 that is fastened through the bottom of the fork leg into the bottom of the nut 342. The QR/tension rod assembly is removed together as it is separated from the fixed nut 342 by a method like that discussed above with regard to Figures 10A, B, and C.

Figure 11B illustrates the parts of fixed nut 342. It includes a cylinder 362 that engages the partially threaded end of the tension rod. A pin 364 stops the insertion of the tension rod to the right depth within the cylinder 362. Housing 366 covers the cylinder (which is actually rectangular in outer cross sectional shape to resist rotation within housing 366) and provides the correct shape to mate within the fork leg. Housing 366 includes a hole 368 to receive the set screw. An end screw cap 372 is secured to the end of the housing and also is fastened the outer end of cylinder 362. An inner cap 374 completes the assembly. It includes an inner aperture to receive the tension rod therethrough.

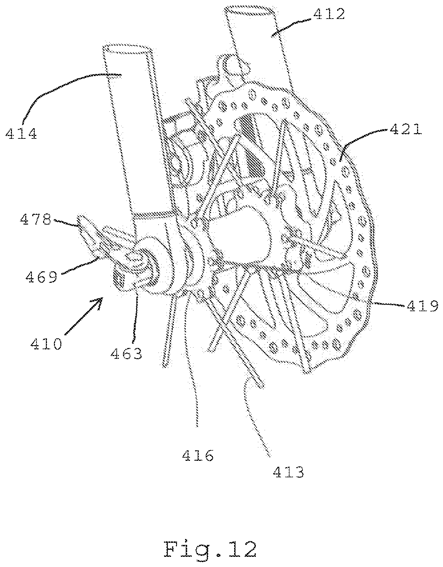

Figures 12 through 28 illustrate additional embodiments of quick-release and braking assemblies of the present invention. Note that while these illustrate the quick-release ("QR") assembly and brake assembly on front forks of a bicycle, a similar arrangement may be employed on a rear wheel and swingarm or stays of a bicycle. Furthermore, the system may be employed on the front or rear of any wheeled vehicle, such as a motorcycle. The brake mount teachings are easily adaptable to a motorcycle arrangement on either the front or rear.

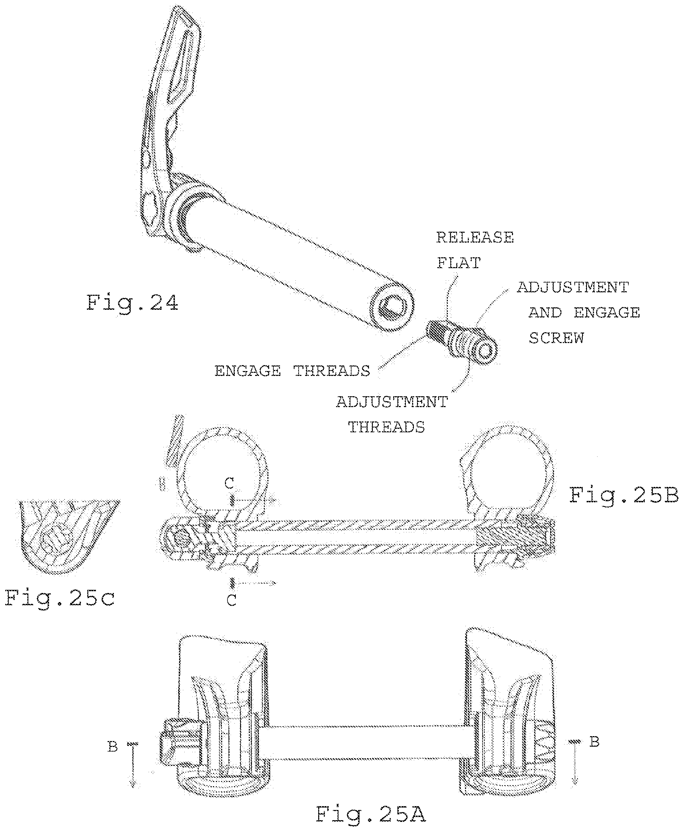

Figures 12 through 23 illustrate a preferred embodiment of the invention showing a QR assembly with a 5mm skewer. However, the same basic construction can be used with other diameter skewers, such as 9mm, 15mm, or 20mm. Figures 24 through 27 show the invention with a 15mm skewer, for example.

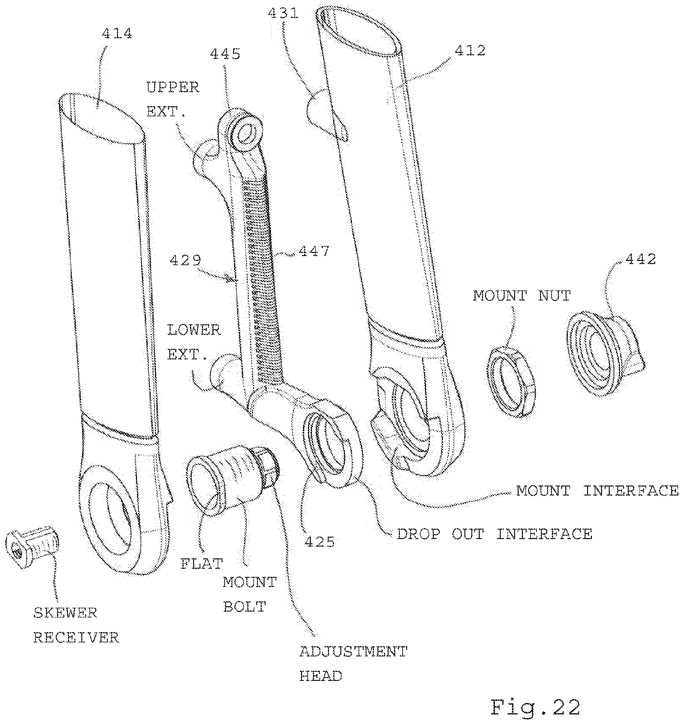

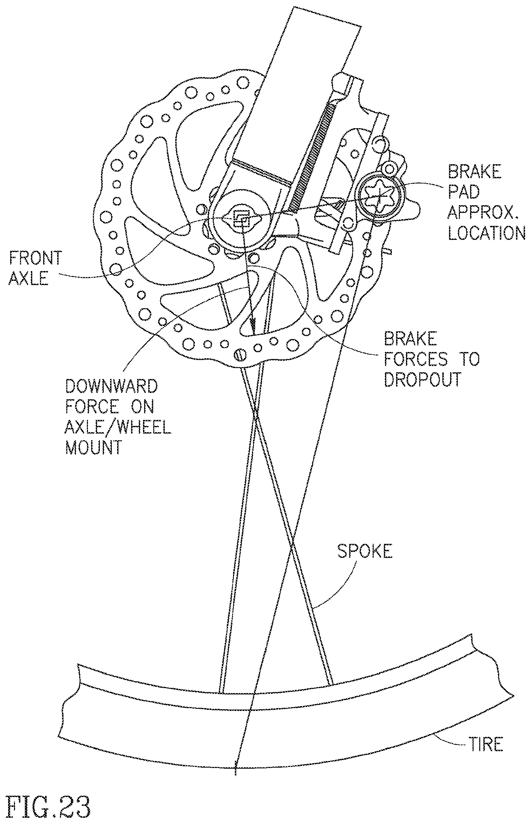

Figure 12 shows the QR assembly 410 with the QR lever 478 closed in the tensioned position. The secondary lock 469 is also engaged to ensure that the lever cannot be accidentally opened. The QR assembly holds the bicycle wheel secure between right fork leg 414 and left fork leg 412 by securing the hub assembly 416 between the fork legs. The brake disc 421 is also held by the hub by a brake disc flange 419. The brake is preferably secured to the left fork leg 412 by a brake mount bracket. The bracket aligns the brake with the brake disc 421. More discussion of the brake mount will follow below in connection with Figures 22 and 23.

The tensioned and locked arrangement shown in Figure 12 is the configuration of the QR assembly ready to ride. The QR lever has the system tensioned in a secure position with the lever preferably extending rearwardly relative to the bicycle. In this position, the lever is not likely to snag on an obstacle, such as rocks, brush, or other vegetation, that may be encountered while riding. As discussed above in connection with previous embodiments, the secondary lock also ensures that the lever is not inadvertently opened, releasing the tension holding the fork legs and hub together.

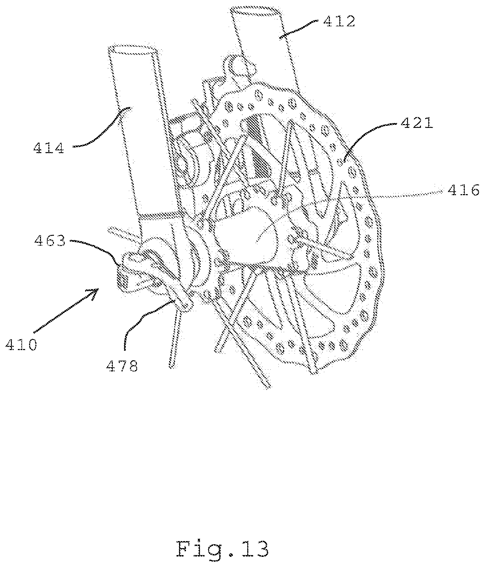

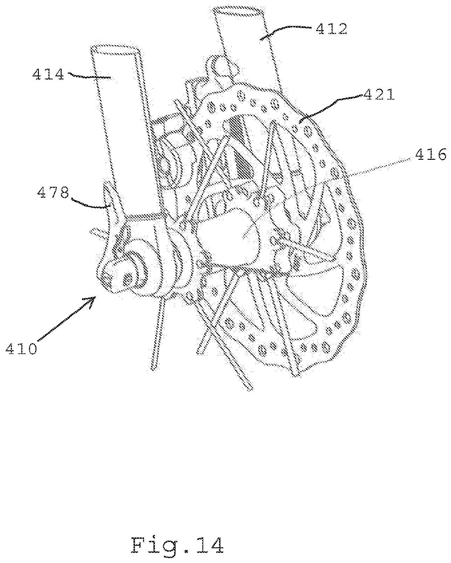

Figure 13 shows the QR lever swung forward, releasing the tension between the fork legs and the hub assembly. To move the QR lever this way, the user first presses on the secondary lock to release the lock and allow movement of the lever. With the QR lever in this position, the QR assembly, including the skewer rod (hidden in this view within the hub) can be rotated. As discussed above, rotation is preferably limited by a clocking configuration of the QR assembly relative to the fork leg. Thus, rotation preferably is held to about 90 degrees. As seen in Figure 14, the rotation of the lever is preferably upward to a substantially vertical position. This position releases the teeth on the end of the skewer from engagement with the nut assembly on the opposite side from the lever, in a manner similar to that explained above with other embodiments. Note that the skewer can alternatively be fixedly secured to the nut on the opposite side of the lever rather than to the QR lever. In such an embodiment, the nut is pulled from the hub and fork legs with the skewer secured thereto rather than pulling the lever with the skewer secured thereto.

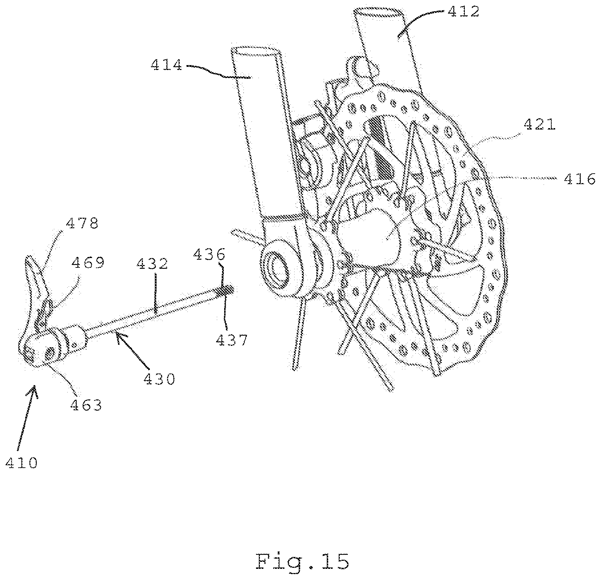

Figure 15 shows the QR lever with the skewer rod assembly 430 pulled from the hub and forks. The lever 478 is secured to the cam follower housing 463 that is in turn secured to a cam (hidden within the housing in this view) and to the skewer rod 432. The distal end of the rod 432 includes threads 437 and flats 436, as discussed in previous embodiments above.

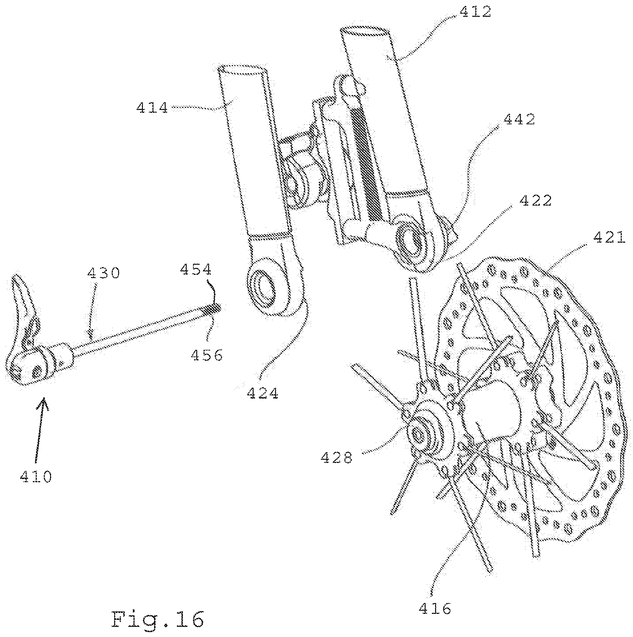

Once the skewer rod assembly is removed from the hub and fork legs, the hub (with spokes, rim, and brake disc attached) may be removed from the fork legs as shown in Figure 16. Note that the nut on the distal side from the lever preferably remains secured to the left fork leg.

Also, note that slots 422 and 424 in the fork legs and brake mount provide shoulders within which the end caps 428 of the hub slide. Thus, the shear impact loads transferring force between the wheel and the forks travel through the hub end caps and into the slots of the forks. These shoulders formed by the slots are much larger in section than the diameter of the skewer rod. Thus, the interface between the shoulders and the hub end caps is a much better load path for transferring forces through the bicycle from the ground impacts. The skewer rod is sufficiently strong to tension the system, while remaining relatively lightweight.

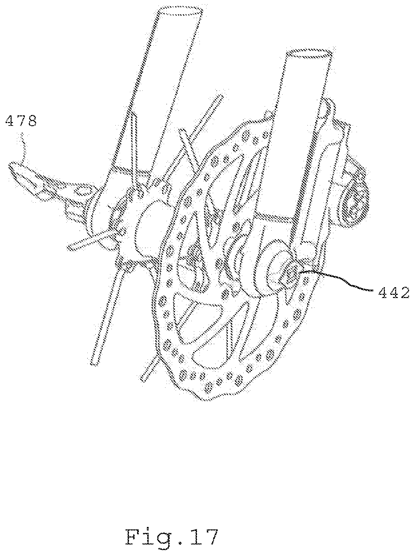

Figure 17 shows the QR assembly inserted within the fork legs and hub in an intermediate position. The lever 478 is pivoted just 90 degrees outwardly from its tensioned and locked position. Thus, the lever is between the positions illustrated in Figures 12 and 13. This is preferably an adjustment position for use of the adjustment nut 442. When the lever 478 is in this position, tightening of the adjustment nut 442 ensures that the right amount of closed-lever tension is provided by the QR assembly for riding the bike. Thus, to confirm proper QR assembly adjustment, the lever 478 is opened 90 degrees - just parallel with the skewer rod - and the adjustment nut 442 is hand-tightened. This is a detent position when rotation of the lever must start building the clamping forces on the overall structure. Then the lever 478 may closed by pivoting it rearwardly into the riding position as shown in Figure 12. Proper tension is ensured.

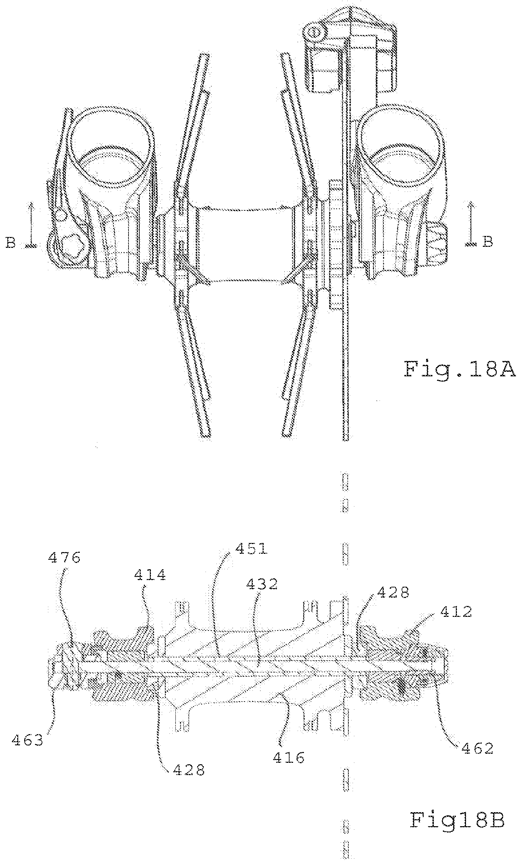

Figure 18A is a top view of the QR assembly securing the wheel hub to the fork legs. This is a slightly different embodiment, as the adjuster nut has a different outer shape. Note that this shows the locked position of the QR lever. In the locked position, the camshaft 476 positions the cam at the outer placement for tensioning the skewer rod 432, as seen in Figure 18B. Figure 18B illustrates a cross-sectional view of the assembly shown in Figure 18A. Also shown in the cross-sectional view is the interface between the end caps 428 and the shoulders of the slots 422. This embodiment does not show the integration of the brake mount with the lower portion of the left fork leg. However, the force transfer is evident between the end caps and the shoulders of the fork slots or "dropout" slots. In this embodiment, an axle sleeve 451 extends within the hub from near the outer sides of the end caps all the way through the hub. This also strengthens the hub to support the loads thereon.

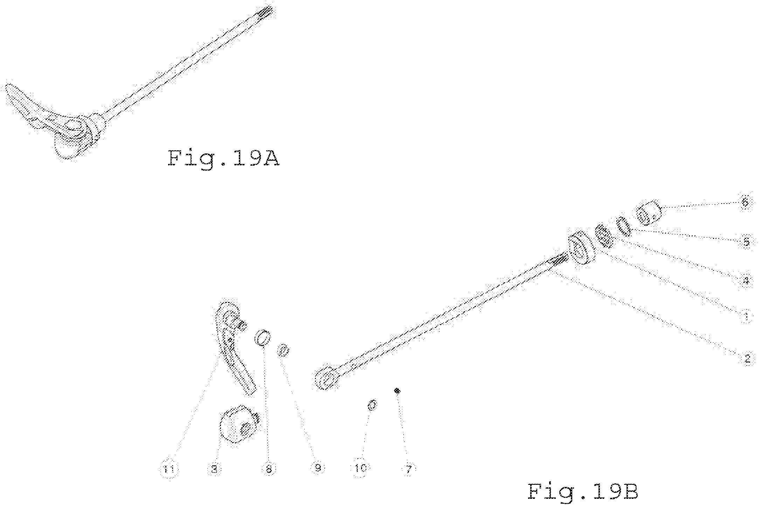

Figures 19A and 19B show more detail of the skewer rod assembly 432 with the lever 478. Referring to the circled numbers in the drawings, the collar (1) includes a dished-out recess into which the side of the lever (11) moves as it pivots. This collar restricts the rotational movement of the lever (11) about an axis perpendicular to the longitudinal axis of the skewer unless the lever (11) and housing (3) are rotated about the longitudinal axis to the proper locking location, in which the teeth at the end of the skewer engage the teeth within the end fastener. This arrangement prevents the lever from being closed in a non-locking position and, thus, provides an extra degree of safety.

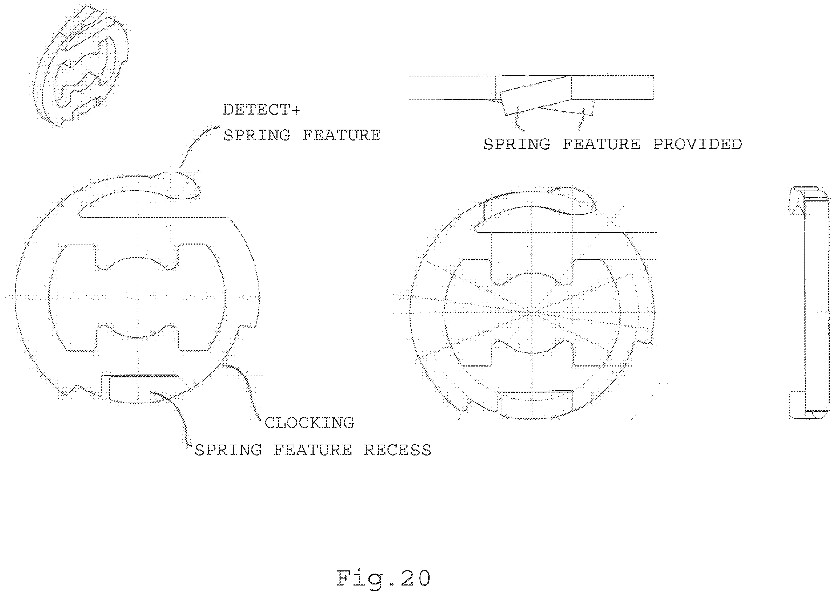

The collar also has a rotational "dead stop" that rides within a recess in the right fork leg "dropout" opening. The recess preferably runs around 90 degrees of the opening such that the collar (1) and lever (11) rotate 90 degrees only. This provides the proper alignment of the bayonet skewer (2) for an engaged and disengaged orientation with the threads and flats on the distal end of the skewer. The lever (11) runs through the cam follower housing (3) and the end of the skewer (2). The camshaft is secured to and projects laterally from the end of the lever (11). The camshaft includes a cam surface that engages the end of the skewer (2). The end of the skewer includes an oblong hole to receive the cam and move axially therewith while remaining stationary side to side relative to the forks and hub. A thrust washer (4) is provided to bear against the collar (1). One version of such a washer is also shown in Figure 20. It provides a detent function to give feel to the rotational positions of the lever (11) about the axis of the skewer - the teeth engagement or non-engagement orientations of the skewer.

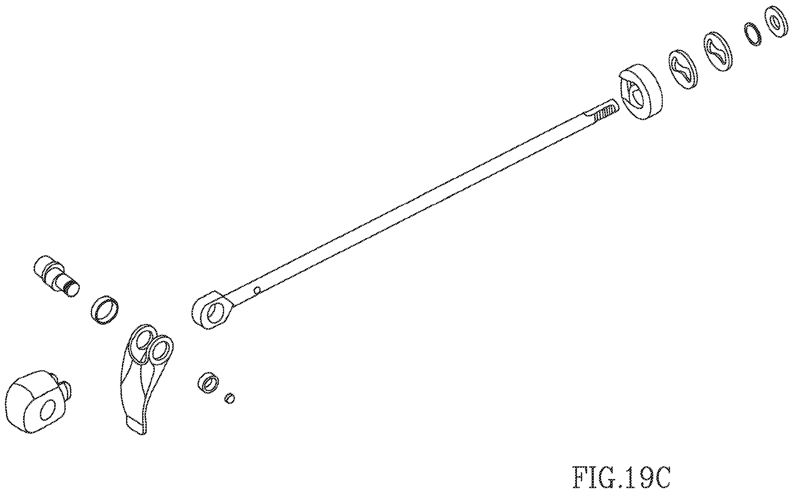

A slightly different embodiment is shown in Figure 19C. The lever includes dual flanges for securing the camshaft between them, as in earlier embodiments herein. The "clocking" is provided by a 90 degree clocking washer that is positioned adjacent to the collar. A 90-degree recess is provided in the washer and a projection on the fork leg, or secured thereto, rides within the recess.

The washer of Figure 20 includes a clocking recess as well as a spring feature and a detent feature. The detent is angled outward of the plane of the washer as is a tab on the other side from the detent. This provides a spring resistance feature for a smooth tensioning of the system.

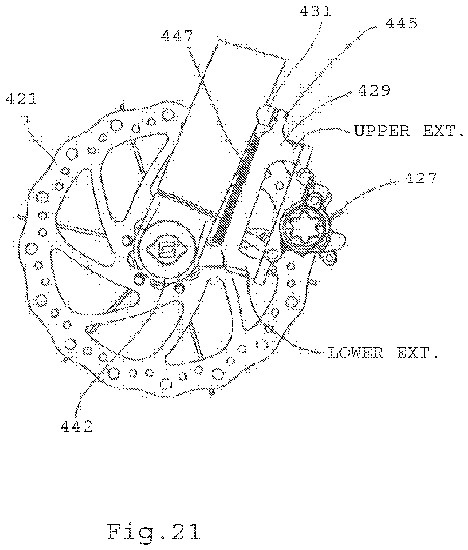

Figure 21 shows a side view of the structure from the disc-brake side. The adjustment nut 442 includes lobes for hand tightening. Tightening with a tool is thus discouraged.

Many parts of the brake assembly 427 are also shown in this view. The brake assembly is secured to a brake mount 429. The mount is replaceable to accommodate different sizes of brake discs. The mount ensures that the alignment of the brake assembly 427 with brake disc 421 is proper. The mount is preferably secured to the left fork leg through a boss 431 fixed to the leg. The mount includes an upper extension and a lower extension for fastening the brake assembly. A portion (preferably a forward portion) of the brake mount includes fins to aid in cooling the brake mount. These fins dissipate heat built up by the brake pads and disc. The heat that transfers to the fork leg is thus reduced. This helps reduce the possibility for heat damage to the fork leg. An insulating washer between the upper mount flange 445 and the brake mount boss 431 also helps keep heat away from the fork leg.

The brake mount lower attachment is better shown in Figure 22. It is secured to the dropout region of the right fork leg. Although alternate embodiments position it on the left leg, right and left can be switched throughout this description. A mount interface is provided in the lower end of the left fork leg to receive the dropout interface for securement and alignment of the brake mount. A mount bolt extends through the dropout interface and the mount interface to engage a mount nut on the outer side of the fork. The mount nut is threaded onto the outer barrel face of the mount bolt inward of the adjustment head. The adjustment nut 442 engages over the top of the adjustment head on the mount bolt. Rotating the adjustment nut rotates to the adjustment head to thereby move the skewer receiver in and out axially relative to the skewer. This provides tension adjustability of the QR system. The adjustment is performed when the tension is relieved in the system by positioning the lever as shown in Figure 17 and described above. The skewer receiver does not rotate as the adjustment head moves it along its threads axially. The flat upper and lower sides of the skewer receiver bear against flat inner sides of the mount bolt such that the receiver cannot rotate. Note that the mount bolt is also timed to the dropout interface and fork leg by the flat on the side thereof. This alignment aids in the alignment of the QR system, as the rotation and orientation of the QR lever is thus facilitated.

The forces exerted on the dropout region of the fork legs are diagramed in Figure 23. The tire contacts the ground and creates a lever arm upon braking that extends between the ground contact and the approximate middle of the brake pad contact with the brake disc or rotor. The lever arm opposing the continued rotation extends between the brake pad and the front axle. The force tends to pivot the wheel about the brake pad, thus causing a downward force on the hub mount. If the dropout opens downwardly, this force tends to pull off (or loosen) the wheel resulting in a potentially dangerous situation. However, as seen in Figure 16, the slots 422 of the present arrangement extend transverse to this wheel-dislocating force. Thus, the force is countered by the shoulders of the slots receiving the load from the end caps of the hub.

Another embodiment of the present invention is illustrated in Figures 24 through 27. This is a 15mm through-axle with a hollow core. The axle includes a female engagement receiver with inner threads rather than a bayonet-style with outer threads. The outer threads are provided on the left-side fixed end. An adjustment and engage screw is provided with threads on both sides of a flange with flat sides. The flat sides retain the orientation relative to the fork legs. They allow the adjustment nut to push and pull the screw in and out axially to provide for proper tension of the QR system. The adjustment and release of the QR system operates in essentially the same way for the user as described above.

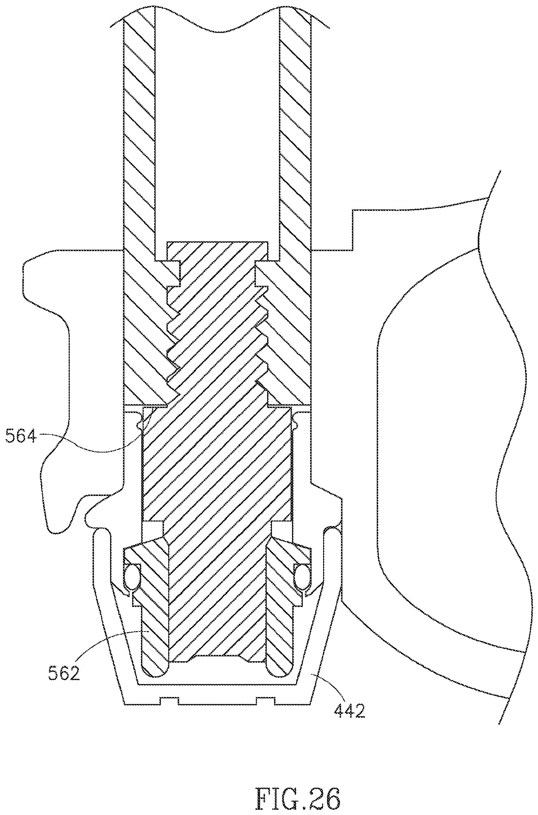

The details of an adjustment and engage screw are shown in Figure 26. The adjustment cap 442 rotates the collar 562 to adjust the axial position of the screw. The skewer is inserted through the right fork leg, through the hub and into the left fork leg. The skewer insertion is stopped by the shoulder 564 at the correct adjusted depth. The skewer is then rotated 90 degrees with the QR lever to interface the threads on the skewer with the engagement threads on the screw. The lever is then closed and locked by the secondary retention lock and the proper tension is thus provided.

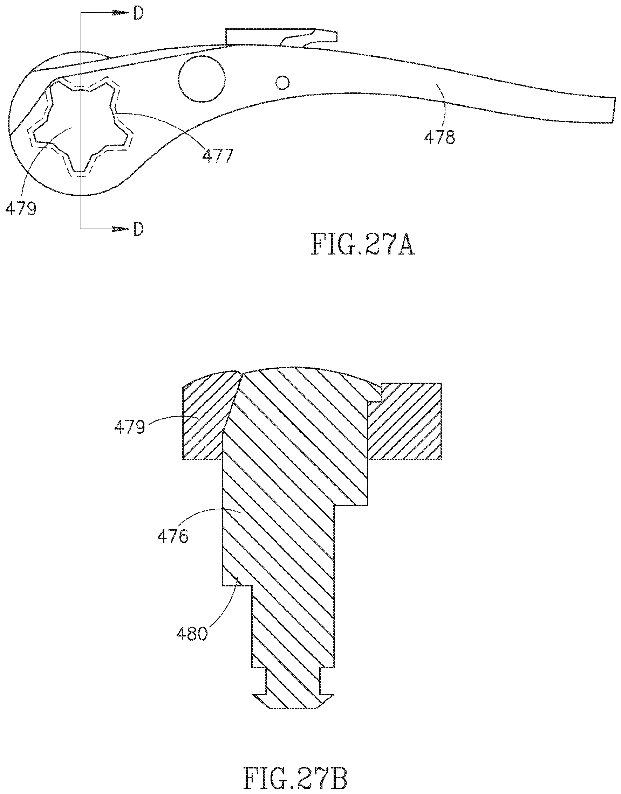

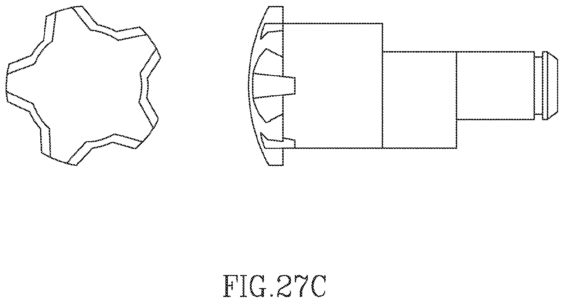

Figures 27A and 27B show the preferred lever and cam arrangement that is used with the QR system of Figures 24 through 26. The lobed head 479 of the camshaft 476 is forged in place over the end of the shaft. It is secured within the end of the QR lever to be rotated thereby.

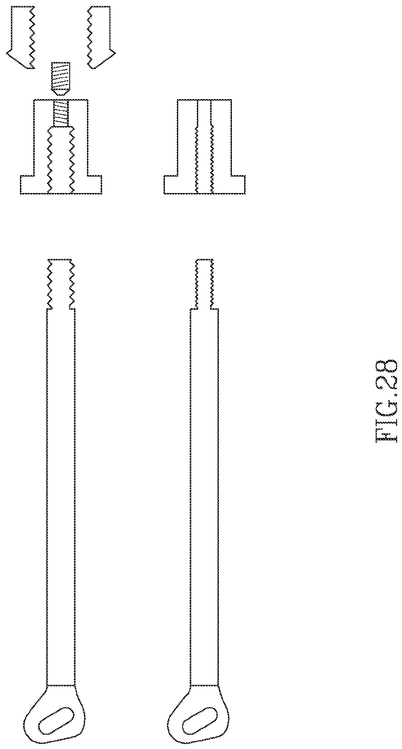

An alternate embodiment of the skewer is disclosed in Figure 28. This may be a simple skewer similar to current systems available that requires the user to screw on the cap. Alternatively, it may be a 90-degree-turn system as taught above. The advantageous aspect to this system of this embodiment is the depth dead stop that provides the user with the proper tension when the QR lever is closed with the cam pulling the skewer into tension. In the first drawing (1) of Figure 28, the depth stop is provided by the end of the bayonet skewer hitting the inner end of the T-nut. The T-nut is engaged in the fork leg directly or indirectly. In this embodiment, a setscrew is used to adjust the proper tension depth. In the second drawing (lower drawing of Figure 28) a stopping face on the shaft is provided at the inward end of the threads to bear against the end face of the T-nut to stop it at the proper location for adequate tension.

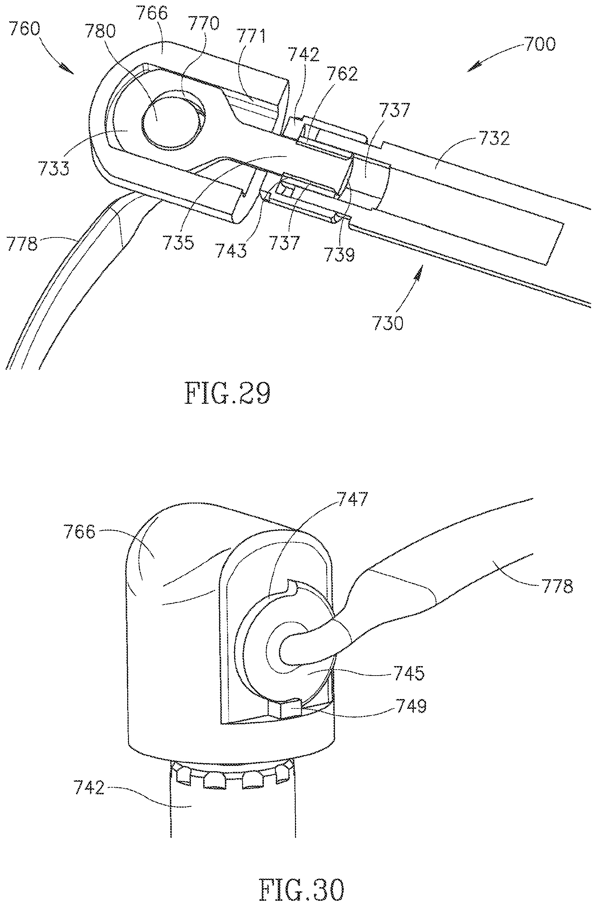

Figures 29-32 illustrate a further alternate embodiment of a QR skewer assembly 700 according to the present invention. In some ways, this embodiment is simplified version that accommodates larger axles, preferably 15-20mm in diameter. As shown in Figure 29, skewer assembly 730 couples to QR assembly 760. QR assembly 760 includes a housing 766 that carries the QR lever 778 coupled to the housing with a cam 780. A cam follower 733 nests within housing 766. Housing 766 includes a housing slide aperture such that cam follower 733 is translatable relative to housing 766 along a longitudinal axis of cam follower 733, which coincides with a longitudinal axis of skewer rod 732. Cam follower 733 is coupled to cam 780 with a follower bore 770 surrounding cam 780. Follower bore 780 is transversely oblong in shape, such that as QR lever 778 is rotated 180 degrees, cam 780 moves side to side within the bore as it also moves back and forth in the longitudinal direction relative to skewer 732. This action tightens or loosens the QR skewer assembly on the vehicle, as described previously with other embodiments.

Cam follower 733 includes a follower shaft 735 that extends within the end of skewer shaft 732. Follower shaft 735 includes threads 743 that engage internal threads within a threaded block 762. In the preferred form of this embodiment, the opposite end of the shaft 732 includes the threads and flats that engage a fastener, such as a thumbnut (not shown) upon 90-degree rotation of the shaft by rotating the lever 778 about the longitudinal axis of the shaft (skewer rod 732). Housing 766 is keyed to the end of tension rod 732 so that the two rotate together about the longitudinal axis of rod 732 for engagement at the opposite end (not shown).

The threaded block 762 is longitudinally slidable within a guide channel 737 in the end of skewer rod 732. The outer face of threaded block 762 is non-circular in cross section and mates with a mating internal shape of guide channel 737. Thus, the block can translate but not rotate within the channel. The outer end of threaded block 762 is secured to an adjustment knob 742 that is threadably engaged to the end of skewer rod 732. Rotating adjustment knob 742 translates threaded block 762 longitudinally within the guide channel 737 such that the tension on the overall QR skewer assembly can be adjusted. Adjustment knob 742 changes the position of QR assembly 760 relative to the skewer assembly 730.

Figure 30 illustrates a preferred rotation limit mechanism for QR lever 778. QR lever 778 includes a limit disk 745 that abuts against the outer side of housing 766. Limit disk 745 includes a peripheral recess that extends slightly more than 180 degrees around the periphery of the disk. This recess and periphery engages an external tooth on the side of housing 766. The disk and tooth limit the rotation of QR lever 778 preferably to about 180 degrees. This rotation moves cam 780 from an innermost longitudinal position with QR lever 778 fully open to an outermost (tight) position with QR lever 778 fully closed. In an open position, housing 766 and cam follower 733 can be rotated relative to skewer assembly 730 to release or engage the threads within threaded block 762. Proper depth insertion of the threads within block 762 is ensured with a clearance head 739 on the end of the follower shaft 735. Head 739 does not include threads and thus will not allow shaft 735 to rotate unless proper insertion is made. Once the threads are engaged, QR lever 778 can be swung to a closed position to tighten the entire QR skewer assembly.

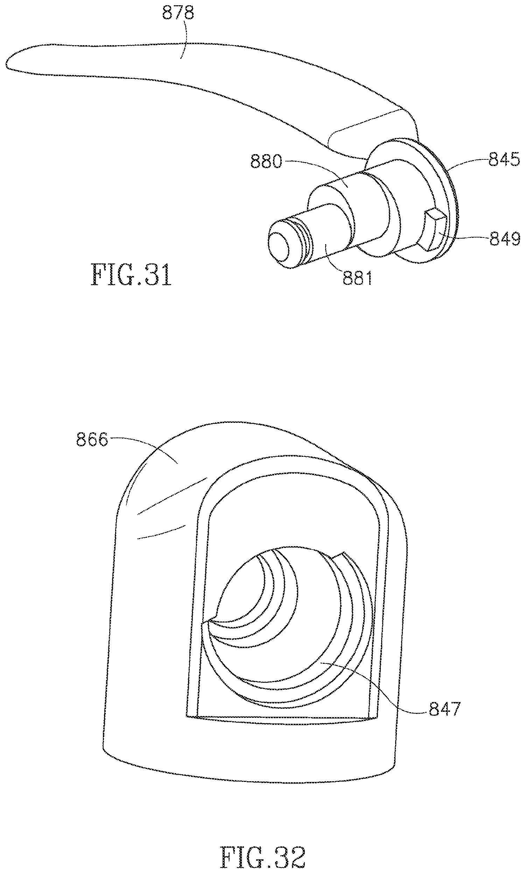

Figures 31 and 32 illustrate a slightly modified QR lever 878 and housing 866 that includes an internal tooth 849 and internal recess 847 as opposed to the external ones described above in connection with Figures 29 and 30. Internal tooth 849 extends from the inner side of limit disk 845 to slide within internal recess 847 in housing 866. Internal recess 847 extends slightly more than 180 degrees to allow approximately 180 degrees of rotation of QR lever 878 relative to housing 866.

Also note in Figure 878 the configuration of cam 880 on the end of QR lever 878. A pin 881 extends from cam 880. Pin 881 is concentric with limit disk 845 to rotate within the aperture within housing 866, such that as QR lever rotates, cam 880 translates relative to housing 866 as discussed above.

All of the embodiments herein provide the user with a system that is quicker to use than current commercially available QR systems, while providing increased safety and performance. For example, better transfer of loads through end caps and shoulders, more precise tensioning of the system without the user having to have special skills, and better primary and secondary safety features to avoid a failure of the wheel and/or brake are all provided.

While the preferred embodiments of the invention have been illustrated and described, as noted above, many changes can be made without departing from the scope of the invention. Accordingly, the scope of the invention is not limited by the disclosure of the preferred embodiment. Instead, the scope of the invention is defined by the claims that follow.

## Claims

1. A fastener (130) comprising:
a shaft (149) having a longitudinal axis, the shaft including an end with multiple teeth (156) in series one after another partially along the longitudinal axis, each tooth running transverse to the longitudinal axis, the teeth being disposed on at least a first side of the shaft, the shaft having an adjacent second side (154) that is recessed relative to the first side such that it does not extend as far from the longitudinal axis of the shaft; and
an engagement mechanism (62) configured to engage the multiple teeth on the shaft when the shaft is oriented in a first rotational position and to disengage the teeth on the shaft when the shaft is oriented in a second rotational position, wherein
the engagement mechanism includes teeth that selectively engage the shaft teeth in the first rotational position,
**characterized in that**
the shaft further includes a head (150) on the end thereof beyond the teeth, the head extending from the longitudinal axis of the shaft further than the second side, the head extending outwardly further than the second side in the direction of the first side, such that the head will not engage with the teeth of the engagement mechanism and thus restricts rotation of the shaft unless the head is extended beyond the teeth of the engagement mechanism.

2. The fastener of Claim 1, wherein the shaft includes a second set of teeth extending along a third side of the shaft opposite the first-side teeth and adjacent to the second, recessed side of the shaft, the shaft also including a fourth side being recessed relative to the third side teeth and relative to the first-side teeth, wherein the second and fourth sides do not include teeth.

3. The fastener of Claim 2, wherein the engagement mechanism includes two opposite sets of teeth that engage the first and second sets of shaft teeth upon rotation of the shaft to the second rotational position.

4. The fastener of any one of the preceding claims, further comprising a tensioning mechanism (160) coupled to at least one of the shaft and the engagement mechanism, the tensioning mechanism operable to place tension on the shaft after the engagement mechanism is in the second rotational position with the teeth engaged.

5. The fastener of Claim 4, wherein the tensioning mechanism includes a cam (80) and a lever (78) rotatable with the cam to move the cam and the engagement mechanism toward and away from the shaft, and
wherein the tensioning mechanism further includes a secondary retention member (88, 90) to restrain the movement of the lever.

## Patentansprüche

1. Befestigungselement (130), das aufweist:
eine Welle (149) mit einer Längsachse, wobei die Welle teilweise entlang der Längsachse ein Ende mit mehreren Zähnen (156) hintereinander enthält, wobei jeder Zahn querliegend zu der Längsachse verläuft, wobei die Zähne wenigstens auf einer ersten Seite der Welle angeordnet sind, wobei die Welle eine benachbarte zweite Seite (154) aufweist, die relativ zu der ersten Seite in der Weise vertieft ist, dass diese nicht so weit von der Längsachse der Welle verläuft; und
einen Eingriffsmechanismus (62), der in der Weise konfiguriert ist, dass dieser mit den mehreren Zähnen an der Welle in Eingriff gelangt, wenn die Welle in einer ersten Drehstellung orientiert wird, und dass sich dieser von den Zähnen an der Welle löst, wenn die Welle in einer zweiten Drehstellung orientiert wird, wobei
der Eingriffsmechanismus Zähne enthält, die in der ersten Drehstellung selektiv mit den Wellenzähnen in Eingriff sind,
**dadurch gekennzeichnet, dass**
die Welle ferner an ihrem Ende jenseits der Zähne einen Kopf (150) enthält, wobei der Kopf von der Längsachse der Welle weiter als die zweite Seite verläuft, wobei der Kopf weiter als die zweite Seite in der Richtung der ersten Seite nach außen verläuft, sodass der Kopf mit den Zähnen des Eingriffsmechanismus nicht in Eingriff ist und somit die Drehung der Welle beschränkt, außer wenn der Kopf über die Zähne des Eingriffsmechanismus hinaus ausgefahren ist.

2. Befestigungselement nach Anspruch 1, wobei die Welle einen zweiten Satz von Zähnen enthält, die entlang einer dritten Seite der Welle verlaufen, die den Zähnen der ersten Seite gegenüberliegen und zu der zweiten, vertieften Seite der Welle benachbart sind, wobei die Welle außerdem eine vierte Seite enthält, die relativ zu den Zähnen der dritten Seite und relativ zu den Zähnen der ersten Seite vertieft ist, wobei die zweite und die vierte Seite keine Zähne enthalten.

3. Befestigungselement nach Anspruch 2, wobei der Eingriffsmechanismus zwei gegenüberliegende Sätze von Zähnen enthält, die nach Drehung der Welle in die zweite Drehstellung mit dem ersten und mit dem zweiten Satz von Wellenzähnen in Eingriff sind.

4. Befestigungselement nach einem der vorhergehenden Ansprüche, das ferner einen Spannmechanismus (160) aufweist, der mit der Welle und/oder mit dem Eingriffsmechanismus gekoppelt ist, wobei der Spannmechanismus dafür betreibbar ist, die Welle unter Spannung zu setzen, nachdem der Eingriffsmechanismus in der zweiten Drehstellung mit den Zähnen in Eingriff ist.

5. Befestigungselement nach Anspruch 4,
wobei der Spannmechanismus einen Nocken (80) und einen Hebel (78), der mit dem Nocken drehbar ist, um den Nocken und den Eingriffsmechanismus in Richtung der Welle und von dieser weg zu bewegen, enthält, und
wobei der Spannmechanismus ferner ein sekundäres Halteelement (88, 90) zum Beschränken der Bewegung des Hebels enthält.

## Revendications

1. Une fixation (130) comprenant :
une tige (149) dotée d'un axe longitudinal, la tige comportant une extrémité avec plusieurs dents (156) en série l'une après l'autre, partiellement le long de l'axe longitudinal, chaque dent passant transversalement par rapport à l'axe longitudinal, les dents étant disposées au moins sur une première face de la tige, la tige possédant une deuxième face (154) adjacente, enfoncée par rapport à la première face, de telle manière à ce qu'elle ne s'étende pas aussi loin de l'axe longitudinal de la tige et
un mécanisme d'engagement (62) configuré pour engager les dents sur la tige lorsque la tige est orientée dans une première position de rotation et désengager les dents sur la tige lorsque la tige est orientée dans une deuxième position de rotation,
le mécanisme d'engagement comportant des dents qui engagent sélectivement les dents de la tige dans la première position de rotation,
**caractérisée en ce que**
la tige comprend en outre une tête (150) sur l'extrémité de celle-ci, au-delà des dents, la tête s'étendant de l'axe longitudinal de la tige plus loin que la deuxième face, la tête s'étendant extérieurement plus loin que la deuxième face dans la direction de la première face de sorte à ne pas être en prise avec les dents du mécanisme d'engagement et à restreindre ainsi la rotation de la tige sauf si la tête est étendue au-delà des dents du mécanisme d'engagement.

2. La fixation de la revendication 1, la tige comportant un deuxième ensemble de dents s'étendant le long d'une troisième face de la tige, opposé aux dents de la première face et adjacent à la deuxième face enfoncée de la tige, la tige comportant également une quatrième face enfoncée par rapport aux dents de la troisième face et par rapport aux dents de la première face, les deuxième et quatrième faces ne comportant pas de dents.

3. La fixation de la revendication 2, le mécanisme d'engagement comportant deux ensembles de dents opposés qui mettent en prise les premier et deuxième ensembles de dents de la tige par rotation de la tige dans la deuxième position de rotation.

4. La fixation de l'une des revendications précédentes, comprenant en outre un mécanisme de tension (160) relié au moins à la tige ou au mécanisme d'engagement, le mécanisme de tension exploitable pour appliquer la tension sur la tige après le mécanisme d'engagement étant dans la deuxième position de rotation avec les dents en prise.

5. La fixation de la revendication 4,
le mécanisme de tension comprenant une came (80) et un levier (78) rotatif avec la came afin de déplacer la came et le mécanisme d'engagement en direction de la tige et loin de celle-ci et
le mécanisme de tension comprenant en outre un élément de rétention secondaire (88, 90) afin de restreindre le mouvement du levier.
